# EUROPÄISCHE PATENTSCHRIFT

(11) **EP 3 898 141 B1**
(45) Veröffentlichungstag und Bekanntmachung des Hinweises auf die Patenterteilung: **01.03.2023**
(21) Anmeldenummer: 19835279.1
(22) Anmeldetag: 18.12.2019
(51) Int. Cl.: B26D 7/06

(54) **SYSTEM ZUM AUFNEHMEN, FÖRDERN UND ABGEBEN EINES PRODUKTS SOWIE VERFAHREN ZUM STEUERN EINES SOLCHEN SYSTEMS**
SYSTEM FOR PICKING UP, CONVEYING, AND DELIVERING A PRODUCT, AND METHOD FOR CONTROLLING SUCH A SYSTEM
SYSTÈME DE RÉCEPTION, DE TRANSPORT ET DE LIVRAISON D'UN PRODUIT AINSI QUE PROCÉDÉ DE COMMANDE D'UN TEL SYSTÈME

(30) Priorität: 19.12.2018 DE 102018132907
(43) Veröffentlichungstag der Anmeldung: 27.10.2021
(73) Patentinhaber: Poly-clip System GmbH & Co. KG, 65795 Hattersheim (DE)
(72) Erfinder: BERGMANN, Martin, 63768 Hösbach (DE)
(74) Vertreter: Eisenführ Speiser
(86) Internationale Anmeldenummer: PCT/EP2019/086082
(87) Internationale Veröffentlichungsnummer: WO 2020/127575

(56) Entgegenhaltungen:
- EP-A1- 3 069 835
- DE-A1-102010 035 657
- DE-B4-102010 035 657
- FR-A1- 2 754 207

## Beschreibung

### GEBIET DER ERFINDUNG

Die vorliegende Erfindung betrifft ein System zum Aufnehmen, Fördern und Abgeben eines Produkts sowie ein Verfahren zum Steuern eines solchen Systems. Das System enthält eine Transportvorrichtung und eine Greifvorrichtung, insbesondere eine Greifvorrichtung, die an einem Handhabungsgerät angebracht ist, zum Bearbeiten von Lebensmitteln.

### HINTERGRUND

Das System dient im Rahmen der vorliegenden Erfindung zum einen zum Aufnehmen, Fördern und Abgeben eines Produkts und zum anderen zum Komprimieren des Produkts in eine vordefinierte Form. Dabei wird das Produkt vorzugsweise von einer Produktauflage bzw. einer Transportvorrichtung aufgenommen und von der Greifvorrichtung ergriffen. Anschließend wird das Produkt mittels des Handhabungsgeräts, an der die Greifvorrichtung angebracht ist, in eine vordefinierte Position transportiert und dort abgegeben. Zudem wird das Produkt von der Greifvorrichtung gezielt am Umfang verpresst, vorzugsweise von oben und seitlich verpresst.

Um bspw. ein Produkt, wie einen Fleischstrang, mittels einer Portioniermaschine in annähernd gleich dicke und schwere Scheiben schneiden zu können, ist es notwendig, den Fleischstrang zunächst in eine vordefinierte Form zu pressen, um den Schneidprozess in der Portioniermaschine zu erleichtern. Hierzu wird, gemäß DE 10 2010 035 657 A1, der Fleischstrang in ein Formrohr eingebracht sowie mittels eines drehbaren Zwischenblechs an einem Ende des Formrohrs und eines verfahrbaren Pressstempels verpresst. Die Form des Fleischstrangs wird hierbei durch die des Formrohrs bestimmt.

Da insbesondere lange Fleischstränge ein nicht unbeträchtliches Gewicht aufweisen können, ist das Aufnehmen und Einlegen dieser Fleischstränge für eine Bedienperson sehr anstrengend und belastend.

Die Aufgabe der Erfindung ist es, ein System zum Aufnehmen, Fördern und Abgeben eines Produkts sowie ein Verfahren zum Steuern eines solchen Systems bereitzustellen, das in der Lage ist, eine Bedienperson zu entlasten, das Produkt zu komprimieren, vorzugsweise seitlich zu komprimieren, und Taktzeiten zu verkürzen.

### ZUSAMMENFASSUNG DER ERFINDUNG

Die Aufgabe wird gelöst, indem ein System zum Aufnehmen, Fördern und Abgeben eines Produkts sowie ein Verfahren zum Steuern eines solchen Systems gemäß der vorliegenden Erfindung bereitgestellt werden, die durch die unabhängigen Ansprüche 1 und 15 definiert sind. Weitere Entwicklungen der Erfindung sind in den abhängigen Ansprüchen definiert.

Ein erfindungsgemäßes System zum Aufnehmen, Fördern und Abgeben eines Produkts an eine Verarbeitungsmaschine, die vorzugsweise zumindest ein aufrechtstehendes Magazinrohr aufweist, enthält: ein Handhabungsgerät, eine an dem Handhabungsgerät lösbar anbringbare Greifvorrichtung, eine Transportvorrichtung und eine Steuereinheit, wobei die Transportvorrichtung einen Transportabschnitt aufweist, auf dem das von der Greifvorrichtung aufzunehmende Produkt in einer Aufnahmeposition zum Aufnehmen des Produkts durch die Greifvorrichtung positionierbar ist, und die Steuereinheit zumindest mit dem Handhabungsgerät, der Greifvorrichtung und der Transportvorrichtung verbunden ist, wobei die Steuereinheit dazu ausgelegt ist, das Erreichen der Aufnahmeposition durch das aufzunehmende Produkt zu erfassen.

Dieses System ist in der Lage, ein Produkt wie bspw. ein Lebensmittel in Form eines Fleischstrangs oder ein mit einer ähnlichen Konsistenz ausgestattetes Lebensmittel wie z.B. Fisch oder Brot zu ergreifen bzw. zu greifen und bspw. zu einer Verarbeitungsstation zu fördern und vorzugsweise zeitgleich auf den nächsten Verarbeitungsschritt vorzubereiten. Dabei können mehrere Verarbeitungsstationen mit Hilfe eines einzigen Handhabungsgeräts beschickt werden, wodurch Kosten und Zeit eingespart werden können. Zudem wird durch die größere Auslastung des Handhabungsgeräts die Effizienz gesteigert.

In einigen Ausführungsformen enthält das System ein erstes Erfassungsmittel, das oberhalb der Transportvorrichtung angebracht ist, wobei das erste Erfassungsmittel dazu ausgelegt ist, das Erreichen der Aufnahmeposition auf der Transportvorrichtung durch das aufzunehmende Produkt zu erfassen. Mit Hilfe des ersten Erfassungsmittels, wie bspw. einer Lichtschranke, eines kapazitiven Sensors, eines mechanischen Sensors oder eines bildgebenden Sensors, lässt sich ein in einer Aufnahmeposition befindliches Produkt erfassen, an der das aufzunehmende Produkt von der Greifvorrichtung ergriffen wird.

In einigen Ausführungsformen enthält das System ein zweites Erfassungsmittel, wobei die Greifvorrichtung über dem wenigstens einen Magazinrohr in einer Abgabeposition zum Abgeben des von der Greifvorrichtung aufgenommenen Produkts in das Magazinrohr positionierbar ist, und das zweite Erfassungsmittel dazu ausgelegt ist, das durch die Greifvorrichtung oberhalb des Magazinrohrs positionierte Produkt zu erfassen. Das zweite Erfassungsmittel kann bspw. eine Lichtschranke, ein kapazitiver Sensor, ein mechanischer Sensor oder ein bildgebender Sensor sein.

In einigen Ausführungsformen enthält das System ein drittes Erfassungsmittel, das oberhalb des wenigstens einen Magazinrohrs der Verarbeitungsmaschine angebracht ist, wobei das dritte Erfassungsmittel dazu ausgelegt ist, ein in das Magazinrohr fallendes Produkt zu erfassen. Das dritte Erfassungsmittel kann bspw. eine Lichtschranke, ein kapazitiver Sensor, ein mechanischer Sensor oder ein bildgebender Sensor sein.

In einigen Ausführungsformen enthält die Greifvorrichtung eine Grundstruktur, die an ein Handhabungsgerät mittels eines Kopplungselements vorzugsweise zerstörungsfrei lösbar anbringbar ist, mindestens zwei Greifelemente, die jeweils wenigstens eine Unterseitenfläche und mindestens eine Oberseitenfläche aufweisen, wobei die Oberseitenflächen der Greifelemente in Richtung des Kopplungselements und die Unterseitenflächen der Greifelemente von dem Kopplungselement wegweisen; mindestens ein Antriebsmittel, um die Greifelemente zwischen einer ersten Position, in welcher die Greifelemente auf gegenüberliegenden Seiten des aufzunehmenden Produkts positionierbar sind, und einer zweiten Position, in der die Greifelemente das aufzunehmende Produkt ergreifen, reversibel zu bewegen, und eine Anschlagplatte, die zumindest annähernd auf den Oberseitenflächen der Greifelemente aufliegt.

In einigen Ausführungsformen weisen die Greifelemente der Greifvorrichtung konkave Greifflächen auf, die in der Lage sind, das aufzunehmende Produkt zumindest teilweise zu untergreifen. Durch diese Formgebung der Greifelemente ist gewährleistet, dass das Produkt nicht nach unten ausweicht. Zudem wird mit Hilfe der Greifflächen die Form des Produkts beeinflusst.

Die Anschlagplatte kann zumindest an einer den Greifelementen zugewandten Seite, insbesondere Unterseite, im Wesentlichen eben und/oder flächig ausgebildet sein. Die Anschlagplatte soll verhindern, dass das von den Greifelementen aufzunehmende Produkt während des Ergreifens des Produkts durch die Greifelemente nicht seitlich nach oben ausweicht. Die Anschlagplatte kann sowohl in der ersten Position als auch in der zweiten Position auf den Oberseitenflächen der Greifelemente aufzuliegen. Dabei kann die Anschlagplatte derart dimensioniert und/oder eine Abmessung der Anschlagplatte derart in Bezug auf einen Abstand der Greifelemente zueinander und/oder eine Bewegungsamplitude der Greifelemente abgestimmt sein, dass die Anschlagplatte in der ersten Position und in der zweiten Position auf den Oberseitenflächen der Greifelemente aufliegt.

Die Greifelemente können beispielsweise eine schalenartige Form besitzen und/oder konkav gekrümmt sein. Ferner können die Oberseitenfläche und Unterseitenfläche der Greifelemente aus einem Stück hergestellt sein. Die Greifelemente können derart ausgelegt und/oder derart dimensioniert sein, dass sie das aufgenommene Produkt nur teilweise untergreifen, sodass stets ein Kontakt zwischen dem Produkt und der Produktauflage besteht. Beispielsweise untergreifen die Greifelemente in Summe weniger als 90 %, weniger als 80 %, weniger 70 %, weniger als 60 % oder weniger als 50 % des Produkts.

In einer beispielhaften Ausführung kann ein Motor, beispielsweise ein Servomotor, Schrittmotor, Asynchronmotor und/oder Gleichstrommotor mit den Greifelementen gekoppelt sein, um deren Bewegung zu steuern, eine auf das zu verpressende Produkt aufzubringende Presskraft einzustellen und/oder das von den Greifern aufgenommen und gegebenenfalls verpresste Produkt an eine gewünschte Weiterverarbeitungsstation, wie beispielsweise eine Fleischportioniermaschine zu verbringen. Der Motor kann dazu eingerichtet sein, eine Presskraft von wenigstens 100 N, wenigstens 500 N, wenigstens 1000 N, wenigstens 1500 N, wenigstens 2000 N, wenigstens 2500 N oder wenigstens 3000 N bereitzustellen.

Durch den Motor kann flexibel auf verschiedene Produktabmessungen reagiert werden, sodass mittels der erfindungsgemäßen Greifvorrichtung Produkte verschiedener Abmessung und/oder Konsistenz ergriffen und gehandhabt werden können. Vor allem im Hinblick auf die Handhabung von Rohprodukten, welche im gefrorenen oder zumindest angefrorenen Zustand ergriffen und weiterverarbeitet werden müssen, hat sich der Einsatz des Motors als vorteilhaft erwiesen. Zum einen besitzen die zu handhabenden Produkte ein hohes Gewicht, zum anderen ist zum formgebenden Verpressen des (an)gefrorenen Produktes eine erhebliche Kraft notwendig, welche auf einfache Weise mittels des Motors bereitgestellt bzw. eingestellt werden kann. Grundsätzlich können auch Rohprodukte im nicht (an)gefrorenen Zustand weiterverarbeitet werden.

Gemäß einer weiteren beispielhaften Ausführung erfolgt das Ergreifen und anschließende Komprimieren des Produkts wie folgt: translatorisches vertikales Herabfahren der Auflageplatten auf das aufzunehmende und zu komprimierende Produkt; translatorisches horizontales Aufeinanderzubewegen der Greifelemente zur Bildung eines Aufnahmeraums zwischen den lateralen Greifelementen, der vertikal oben angeordneten Anschlagplatte und gegebenenfalls der vertikal unten angeordneten Produktauflage, wie beispielsweise einer Zuförderung, die beispielsweise durch ein Förder-/Transportband realisiert sein kann; Ausüben eines gewünschten Druckes/einer gewünschten Druckkraft auf das aufgenommene Produkt mittels der Greifelemente, wobei die Aufbringung der Haltekraft mittels eines Motors, beispielsweise eines Servomotors, Schrittmotors, Asynchronmotors und/oder Gleichstrommotors, erfolgen und/oder gesteuert werden kann. Dabei kann die Anschlagplatte ortsfest verbleiben und dazu dienen, ein Ausweichen des Produkts nach oben zu verhindern.

In einer beispielhaften Ausführung liegt die Auflageplatte in jeder Betriebsposition der Greifelemente auf den Oberseitenflächen der Greifelemente auf. Mit anderen Worten ist eine horizontale, translatorische Bewegungsamplitude der Greifelemente derart eingestellt, dass die Anschlagplatte stets auf den Oberseitenflächen der Greifelemente aufliegt.

In einigen Ausführungsformen ist zumindest eines der Greifelemente bezüglich der Grundstruktur translatorisch und/oder rotatorisch bewegbar. Durch translatorisch und/oder rotatorisch bewegbare Greifelemente sind Produkte auch an schwer erreichbaren Stellen aufnehmbar, da die Breite der Greifvorrichtung verringert werden kann. Dies kann bspw. durch drehbar gelagerte Greifelemente realisiert werden, die sich scherenartig reversibel öffnen und schließen lassen, wodurch eine geringe Greiföffnungsbreite notwendig wird, um das Produkt zu ergreifen.

In einigen Ausführungsformen sind die Greifelemente mittels werkzeuglos lösbarer Befestigungsmittel an der Greifvorrichtung angebracht. Dies ermöglicht eine schnelle Austauschbarkeit der Greifelemente, wodurch eine Anpassung seitens der Greifelemente je nach Art des Produkts und dessen Formgebung erfolgen kann.

In einigen Ausführungsformen ist an der Anschlagplatte zumindest ein Saugelement angeordnet, das während eines Saugprozesses das aufzunehmende Produkt zumindest teilweise anhebt. Das Saugelement dient hierbei zum Ansaugen des Produkts von einer Auflagefläche für das Produkt, bei dem es sich zum Beispiel um ein Förderband handeln kann, mit dem das Produkt zu der Greifvorrichtung gefördert wird. Hierdurch müssen die Greifelemente nicht auf die Produktauflage aufgesetzt werden, um das Produkt gezielt zu ergreifen.

In einigen Ausführungsformen ist das Saugelement so in die Anschlagplatte eingelassen bzw. integriert, dass dieses während des Saugprozesses zumindest annähernd eine gerade Fläche mit der Anschlagplatte bildet. Durch diese spezifische Anordnung des Saugelements wird gewährleistet, dass das Produkt durch das Saugelement nicht unerwünschterweise verformt wird.

In einigen Ausführungsformen wird jedes der Greifelemente mittels zumindest zwei Führungsstangen geführt. Dadurch wird die Stabilität der Greifelemente vergrößert und eine rotatorische Bewegung um eine der Führungsstangen verhindert bzw. die Kräfte, um eine solche Rotation zu verhindern, werden verkleinert.

In einigen Ausführungsformen sind die Greifelemente der Greifvorrichtung in der Lage, das Produkt in eine vordefinierte Form zu verpressen. Eine Verpressung des Produkts ist oftmals erforderlich, um dieses bspw. in ein sog. Form- oder Magazinrohr einzubringen. Da das Fördern und das Verpressen in einem Bearbeitungsgang erfolgt, können Zeit und zusätzliche Bauteile an der Weiterverarbeitungsstation eingespart werden.

In einigen Ausführungsformen ist ein Erfassungsmittel an der Anschlagplatte angebracht, das in der Lage ist, das Produkt zu erfassen. Die Detektion des Produkts dient zum Erfassen des Produkts zwischen den Greifelementen, was ein gezieltes und zeitgesteuertes Greifen ermöglicht.

In einigen Ausführungsformen weist die Transportvorrichtung einen Endlosförderer auf, der mindestens zwei Umlenkrollen und ein endloses Förderband enthält, wobei auf einem produktfördernden Abschnitt des Transportbands das von der Greifvorrichtung aufzunehmende Produkt in eine Bewegungsrichtung gefördert wird. Das Transportband dient dazu, das aufzunehmende Produkt in die Reichweite des Handhabungsgeräts zu befördern.

Gemäß einem erfindungsgemäßen Verfahren zum Steuern eines Systems enthält dieses die folgenden Schritte: Erfassen des aufzunehmenden Produkts auf einer Produktauflage der Transportvorrichtung, Positionieren der Greifelemente der Greifvorrichtung in eine erste Position, in welcher die Greifelemente auf gegenüberliegenden Seiten des aufzunehmenden Produkts positioniert sind, Ergreifen des aufzunehmenden Produkts, indem sich mindestens eines der Greifelemente in die Richtung des Produkts reversibel bewegt, bis eine zweite Position erreicht ist, Komprimieren des Produkts, wobei das Produkt mittels der Greifelemente und der Anschlagplatte sowie ggf. der Produktauflage in eine vordefinierte Form gepresst wird, Verfahren der Greifvorrichtung mit dem Produkt in eine vordefinierte Position, und Abgeben des Produkts in ein Magazinrohr einer Verarbeitungsmaschine. In der vordefinierten Position befindet sich das Produkt vorzugsweise senkrecht zum Magazinrohr der Verarbeitungsmaschine, so dass es einfach in das Magazinrohr abgegeben werden kann.

Nach einem weiteren Verfahren wird das Produkt auf der Produktauflage des Transportbands mittels der Greifelemente, der Anschlagplatte und der Produktauflage in eine vordefinierte Form gepresst.

Nach einem weiteren Verfahren wird das Produkt während des Verfahrens mittels der Greifelemente und der Anschlagplatte in eine vordefinierte Form gepresst.

Nach einem weiteren Verfahren ist ein zweites Erfassungsmittel vorgesehen, das das Produkt in der Greifvorrichtung erfasst, während sich dieses in der vordefinierten Position überhalb des Magazinrohrs befindet.

Nach einem weiteren Verfahren ist ein drittes Erfassungsmittel vorgesehen, das eine Abwurfzeit erfasst, wobei die Abwurfzeit einer Zeitspanne entspricht, die im Wesentlichen beim Abgeben des Produkts durch die Greifvorrichtung in das Magazinrohr beginnt, und endet, sobald sich das Produkt im Wesentlichen vollständig innerhalb des Magazinrohrs befindet.

In einer weiteren Ausführungsform kann ein Ausheber unterhalb einer Produktauflage und/oder einem Transportband angeordnet sein, wobei der Ausheber in der Lage ist, das aufzunehmende Produkt und die Produktauflage und/oder das Transportband anzuheben. Dabei dient das Anheben der Produktauflage und/oder des Transportbandes dazu, dass dieses beim Ergreifen des Produkts mittels der Greifvorrichtung nicht beschädigt oder versehentlich gegriffen wird. Somit erhöht der Ausheber zudem die Lebensdauer der Produktauflage und/oder des Transportbandes, da die Greifvorrichtung im Wesentlichen keinen Kontakt mit dieser/diesem hat. Eine derartige Ausgestaltung kann auch unabhängig von der vorstehend geschilderten Greifvorrichtung eingesetzt werden.

Gemäß einem weiteren Aspekt der vorliegenden Erfindung ist ein System bereitgestellt, das dazu eingerichtet ist, eine Lebensmittel-Verarbeitungsmaschine, wie eine Portioniermaschine, welche zumindest ein Magazinrohr aufweist, zu befüllen.

Das System umfasst eine Lebensmittel-Portioniermaschine, die zumindest ein Magazinrohr aufweist. Das Magazinrohr kann dabei vorzugsweise aufrechtstehend angeordnet sein. Portioniermaschinen werden in der Regel dazu verwendet, strangförmige Lebensmittel, wie Fleisch-, Fisch-, Geflügel-, Wurstprodukte oder Backwaren in Scheiben gleicher Dicke und/oder Gewicht zu schneiden, die anschließend als Einzelportionen oder zu Portionen mit mehreren Scheiben verpackt werden. Portioniermaschinen können zum Unterteilen eines strangförmigen Produkts in Einzelportionen eingesetzt werden.

Des Weiteren weist das System eine Transportvorrichtung zum Fördern des Lebensmittel-Produkts auf. Die Transportvorrichtung kann beispielsweise ein Endlos-Transport- oder - Förderband sein. Mittels der Transportvorrichtung werden die Lebensmittel-Produkte im Wesentlichen horizontal zugefördert. Die Förderrichtung der Transportvorrichtung entspricht dabei im Wesentlichen der Orientierung des strangförmigen Lebensmittel-Produkts auf der Transportvorrichtung.

Eine Greifvorrichtung ist dazu eingerichtet, das Lebensmittel-Produkt von der Transportvorrichtung aufzunehmen bzw. abzuheben und an die Lebensmittel-Verarbeitungsmaschine abzugeben. In einer beispielhaften Ausführung wird das Lebensmittel-Produkt an das Magazinrohr abgegeben. Beispielsweise kann das Magazinrohr im Wesentlichen säulenartig ausgebildet sein und/oder einen zylindrischen Querschnitt besitzen und Durchgangsschächte zum Durchführen des Lebensmittel-Produkts aufweisen. In der Regel ist das Magazinrohr vertikal ausgerichtet, sodass auch die Durchgangsschächte vertikal orientiert sind. Grundsätzlich ist es aber auch denkbar, dass das Magazinrohr in einem spitzen Winkel relativ zur vertikalen Richtung bzw. Achse der Lebensmittel-Verarbeitungsmaschine angeordnet ist. In einer weiteren beispielhaften Ausführung wird das Lebensmittel-Produkt in das Magazinrohr eingeworfen. Das Einwerfen des Lebensmittel-Produkts in das Magazinrohr kann im Wesentlichen ausschließlich unter der Einwirkung der Gewichtskraft und/oder ohne zusätzliche Hilfsmittel erfolgen.

Ferner besitzt das System ein Handhabungsgerät, an dem die Greifvorrichtung lösbar anbringbar ist. Das Handhabungsgerät ist beispielsweise ein Knickarmroboter bzw. einen Sechs-Achs-Roboter, ein Portalroboter, ein Scara-Roboter, ein Parallelroboter oder ein Kran, wobei ein Roboter im Allgemeinen einen Manipulator darstellt, der eine universelle, programmierbare Maschine zur Handhabung oder Bearbeitung von Werkstücken oder dergleichen ist. Das Handhabungsgerät dient dazu, die Greifvorrichtung zu handhaben. In einer beispielhaften Ausführung wird mittels des Handhabungsgeräts das Transportieren des mittels der Transporteinrichtung zugeförderten Lebensmittel-Produkts in das Magazinrohr der Portioniermaschine bewerkstelligt. Das Handhabungsgerät kann dazu in der Lage sein, die Greifvorrichtung in die Lage zu versetzen, das im Wesentlichen horizontal orientierte zugeförderte Lebensmittel-Produkt zu ergreifen und vorzupressen.

Das Lebensmittel-Produkt wird so in einen vordefinierten Querschnitt verpresst, dass es anschließend in das Magazinrohr der Portioniermaschine abgegeben werden kann. Der vordefinierte Querschnitt ist daher vorzugsweise kleiner als der Querschnitt des Magazinrohrs der Portioniermaschine. Das Handhabungsgerät kann dazu in der Lage sein, die Greifvorrichtung in die Lage zu versetzen, das Lebensmittel-Produkt während des Transports von der Transporteinrichtung zum Magazinrohr so zu verschwenken, dass es in eine geeignete Position gebracht wird, in der das Lebensmittel-Produkt an das Magazinrohr abgegeben werden kann. Beispielsweise kann das Lebensmittel-Produkt während des Transports von der Transporteinrichtung so zum Magazinrohr hin gedreht werden, sodass es senkrecht zum Magazinrohr positioniert ist und in das Magazinrohr abgegeben bzw. eingeworfen werden kann.

Außerdem ist eine Steuereinheit vorgesehen. Die Steuereinheit kann dazu vorgesehen sein, den Betrieb des Systems zu steuern.

Die Transportvorrichtung weist ferner einen Transportabschnitt auf, auf dem das von der Greifvorrichtung aufzunehmende Lebensmittel-Produkt in einer Aufnahmeposition zum Aufnehmen des Lebensmittel-Produkts durch die Greifvorrichtung positionierbar ist.

Gemäß der vorliegenden Erfindung ist die Steuereinheit zumindest mit dem Handhabungsgerät, der Greifvorrichtung und der Transportvorrichtung verbunden ist. Beispielsweise ist die Steuereinheit signalübertragungs- oder steuerungsgemäß mit Handhabungsgerät, Greifvorrichtung und Transportvorrichtung verbunden. Dies bedeutet, dass die Steuereinheit den Betrieb der einzelnen Komponenten des erfindungsgemäßen Systems steuern kann. Gemäß einer beispielhaften Weiterbildung können die einzelnen Komponenten unabhängig voneinander angesteuert werden, wodurch das System besonders effizient arbeiten kann. Ferner ist die Steuereinheit dazu ausgelegt, das Erreichen der Aufnahmeposition durch das aufzunehmende Lebensmittel-Produkt zu erfassen. Das Erfassen der Aufnahmeposition durch das Lebensmittel-Produkt kann beispielsweise als eine Art Trigger oder Initiator zum Auslösen von Verarbeitungsmaßnahmen verwendet werden.

Bei der vorliegenden Erfindung geht es unter anderem darum, ein strangförmiges Lebensmittel-Produkt, welches im Wesentlichen in Horizontalrichtung mittels der Transporteinrichtung zugefördert wird, einer Portioniermaschine zur weiteren Verarbeitung, wie einer Verpressung und einer anschließenden Portionierung, zuzuführen. Dabei muss das strangförmige Produkt so gedreht werden, dass es in das Magazinrohr der Portioniermaschine eingeworfen werden kann. Dies wird erfindungsgemäß unter anderem dadurch besonders effizient realisiert, dass eine Steuereinheit mit sämtlichen Komponenten verbunden ist, um deren Betrieb unabhängig voneinander zu steuern

### BESCHREIBUNG DER ZEICHNUNGEN

- Fig. 1: zeigt eine perspektivische Ansicht eines Systems, wobei das System aus einem Handhabungsgerät, einer an dem Handhabungsgerät lösbar anbringbaren Greifvorrichtung, einer Transportvorrichtung, und einer Verarbeitungsmaschine besteht, nach einer Ausführungsform der vorliegenden Erfindung;
- Fig. 2: zeigt eine perspektivische Ansicht des in Figur 1 gezeigten Handhabungsgeräts, an dem die Greifvorrichtung angebracht ist;
- Fig. 3: zeigt eine perspektivische Ansicht der in Figur 1 gezeigten Greifvorrichtung;
- Fig. 4: zeigt eine Draufsicht der in Figur 1 gezeigten Greifvorrichtung.
- Fig. 5: zeigt eine Schnittansicht entlang der Linie V-V in Figur 4 der in Figur 1 gezeigten Greifvorrichtung;
- Fig. 6: zeigt eine Vorderansicht der in Figur 1 gezeigten Greifvorrichtung im geöffneten Zustand;
- Fig. 7: zeigt eine Vorderansicht der in Figur 1 gezeigten Greifvorrichtung im geschlossenen Zustand;
- Fig. 8: zeigt eine Vorderansicht einer Greifvorrichtung im geöffneten Zustand nach einer weiteren Ausführungsform der vorliegenden Erfindung;
- Fig. 9: zeigt eine perspektivische Teilansicht des in Figur 1 gezeigten Systems mit einem ersten Erfassungsmittel zum Erfassen einer Aufnahmeposition eines zu handhabenden Produkts auf einer Transportvorrichtung, nach einer Ausführungsform der vorliegenden Erfindung;
- Fig. 10: zeigt eine perspektivische Teilansicht des in Figur 1 gezeigten Systems mit einem zweiten Erfassungsmittel zum Erfassen eines zu handhabenden Produkts, welches sich in einer Abgabeposition befindet, nach einer Ausführungsform der vorliegenden Erfindung;
- Fig. 11: zeigt eine perspektivische Teilansicht des in Figur 1 gezeigten Systems mit einem dritten Erfassungsmittel zum Erfassen eines zu handhabenden Produkts zwischen einer Greifvorrichtung und einem Abgabemagazinrohr, nach einer Ausführungsform der vorliegenden Erfindung; und
- Fig. 12: zeigt eine perspektivische Teilansicht des in Figur 1 gezeigten Systems mit einem dritten Erfassungsmittel zum Erfassen eines zu handhabenden Produkts zwischen einer Greifvorrichtung und einem Abgabemagazinrohr, nach einer weiteren Ausführungsform der vorliegenden Erfindung.

### DETAILLIERTE BESCHREIBUNG

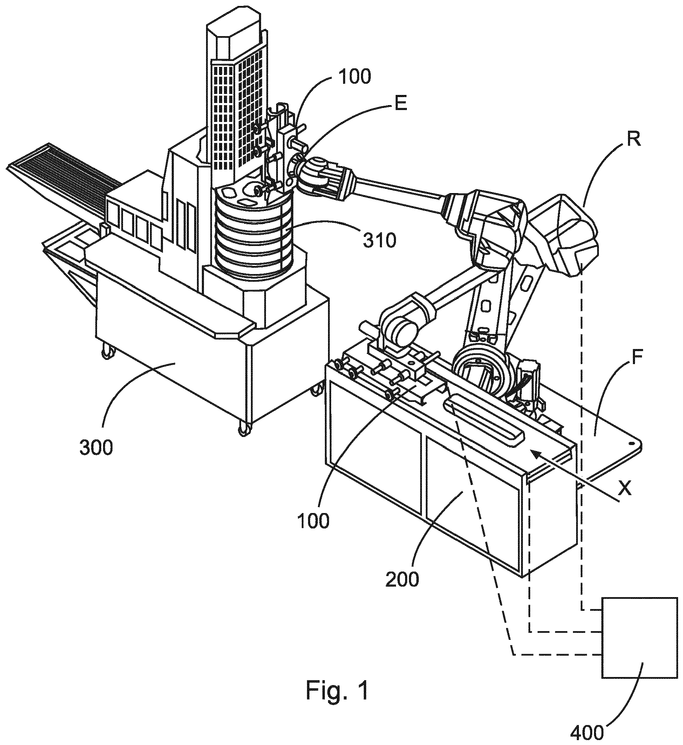

Figur 1 zeigt eine perspektivische Überblicksansicht eines Systems bestehend aus einem Handhabungsgerät R, einer an dem Handhabungsgerät R lösbar anbringbaren Greifvorrichtung 100, einer Transportvorrichtung 200, und einer Verarbeitungsmaschine 300.

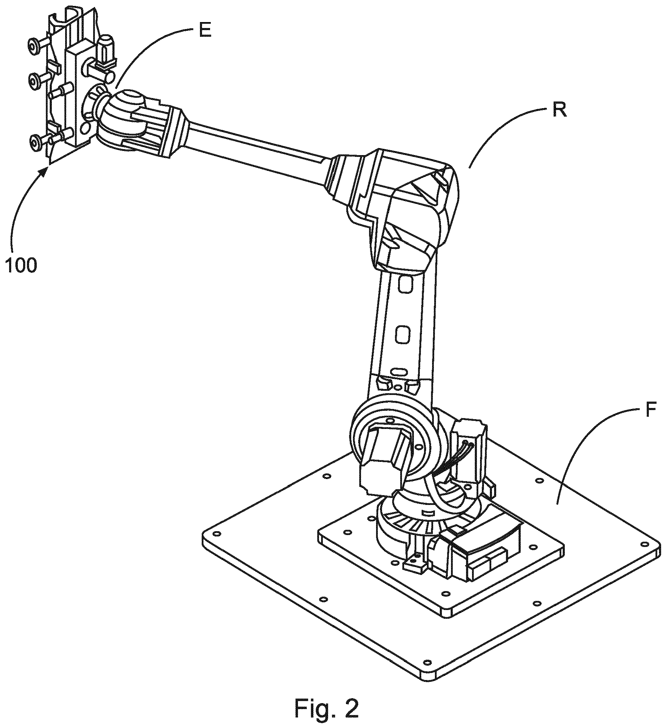

Figur 2 zeigt eine perspektivische Überblicksansicht eines Handhabungsgeräts R, bei dem es sich um einen Knickarmroboter bzw. einen Sechs-Achs-Roboter handelt. Ein Roboter ist ein Manipulator, der wiederum eine universelle, programmierbare Maschine zur Handhabung, Montage oder Bearbeitung von Werkstücken oder dergleichen ist. Das Handhabungsgerät R könnte jedoch auch jedes andere Gerät sein, das in der Lage ist, ein Produkt aufzunehmen, zu fördern und abzugeben. Denkbar wäre bspw. ein Portalroboter, ein Scara-Roboter, ein Parallelroboter oder ein Kran.

Der Roboter R steht auf einer oder mehreren Fundamentplatten F, wobei der Roboter R und die Fundamentplatten F, vorzugsweise durch Befestigungsmittel, wie bspw. Schrauben, in dem Boden verankert sind. Dabei leiten die Fundamentplatten F die während des Betriebs des Roboters R entstehenden Kräfte großflächig in den Boden ab. Unter dem Begriff Boden ist hierbei ein geeignetes Fundament zu verstehen, welches die Kräfte des Roboters R aufnimmt, weitestgehend abschwächt und großflächig in das Erdreich ableitet.

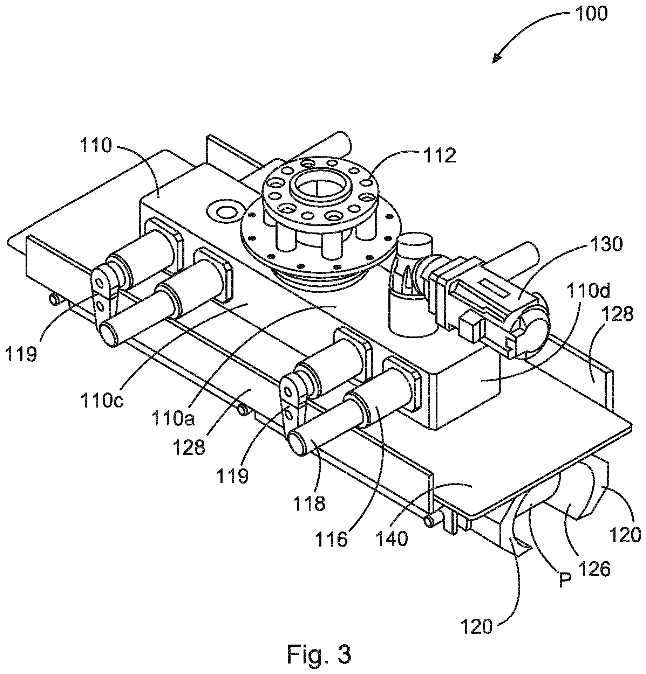

An dem freien Ende des nicht näher bezeichneten Roboterarms ist ein Endflansch E vorgesehen, der zur lösbaren Anbringung einer erfindungsgemäßen Greifvorrichtung 100, wie sie nachstehend im Zusammenhang mit den Figuren 3 bis 8 beschrieben wird, dient.

Die Steuerung des Roboters R, der Greifvorrichtung 100 und der Transportvorrichtung 200 wird vorzugsweise über eine Steuereinheit 400 bewerkstelligt, die mit dem Roboter R, der Greifvorrichtung 100 und der Transportvorrichtung 200 verbunden ist. Die Steuereinheit 400 ist in der Lage, den Roboter R ebenso wie die Greifvorrichtung 100 und die Transportvorrichtung 200 unabhängig voneinander anzusteuern.

Die Steuereinheit 400 ist zumindest mit dem Handhabungsgerät R, der Greifvorrichtung 100 und der Transportvorrichtung 200 verbunden. Beispielsweise ist die Steuereinheit 400 signalübertragungs- oder steuerungsgemäß mit Handhabungsgerät R, Greifvorrichtung 100 und Transportvorrichtung 200 verbunden. Dies bedeutet, dass die Steuereinheit 400 den Betrieb der einzelnen Komponenten des erfindungsgemäßen Systems steuern kann. Die einzelnen Komponenten können unabhängig voneinander angesteuert werden, wodurch das System besonders effizient arbeiten kann. Ferner kann die Steuereinheit 400 das Erreichen der Aufnahmeposition A durch das aufzunehmende Lebensmittel-Produkt erfassen. Das Erfassen der Aufnahmeposition A durch das Lebensmittel-Produkt kann beispielsweise als eine Art Trigger oder Initiator zum Auslösen von Verarbeitungsmaßnahmen verwendet werden.

Vorzugsweise werden sowohl der Roboter R, die Greifvorrichtung 100, die Transportvorrichtung 200 als auch die Steuereinheit 400 mittels mindestens einer externen Energieversorgung gespeist.

Der Knickarmroboter R ist in der Lage, sowohl translatorische als auch rotatorische Bewegungen durchzuführen und ist somit im Raum frei beweglich. Zudem lässt sich die an dem Roboter R befestigte Greifvorrichtung 100 getrennt von dem Roboter R ansteuern, was eine zeitgleiche Ansteuerung des Roboters R und der Greifvorrichtung 100 ermöglicht. Dies bedeutet, dass die Greifvorrichtung 100 während des Verfahrens des Roboters R geöffnet und geschlossen werden kann bzw. das Produkt P in eine vordefinierte Form verpresst werden kann. Das Produkt wird beispielsweise so in einen vordefinierten Querschnitt verpresst, dass es anschließend in das Form- oder Magazinrohr 310 der Portioniermaschine 300 abgegeben werden kann. Der vordefinierte Querschnitt ist daher vorzugsweise kleiner als der Querschnitt der Öffnung des Form- oder Magazinrohrs 310 der Portioniermaschine 300.

Zudem zeigt die Figur 1 eine Transportvorrichtung 200, die zumindest teilweise in Reichweite der Greifvorrichtung 100 des Roboters R angeordnet ist. In der vorliegenden Ausführungsform ist die Transportvorrichtung 200 ein Endlosförderer 200 bzw. ein Förderband 200.

Der Endlosförderer 200 ist in der vorliegenden Ausführungsform direkt vor dem Roboter R angeordnet und besteht im Wesentlichen aus einem Gehäuse 210, mindestens zwei Umlenkrollen 220, einem Antrieb 230 (nicht gezeigt) und einem endlosen Förderband 240.

Das Gehäuse 210 des Förderbands 200 besteht im Wesentlichen aus einem quaderförmigen Gehäuse 210. Das quaderförmige Gehäuse 210 weist eine zum Boden weisende Unterseite 212 und eine parallel gegenüberliegende Oberseite 214 auf. Auf der Unterseite 212 des Gehäuses 210 sind an dessen vier Ecken jeweils ein Standfuß 216 angebracht. Die Standfüße 216 sind höhenverstellbar und dienen zum Austarieren des Förderbands 200.

Das Gehäuse 210 und die Standfüße 216 bestehen bspw. aus Edelstahl oder einem anderen lebensmitteltauglichen Material. Des Weiteren können das Gehäuse 210 und die Standfüße 216 eine Beschichtung aufweisen, die das Material schützt und/oder zur Lebensmitteltauglichkeit des Gehäuses führt.

Die Umlenkrollen 220 und das endlose Förderband 240 sind auf der Oberseite 214 des Gehäuses 210 angeordnet. Dabei sind zwei Umlenkrollen 220 auf gegenüberliegenden Enden der Oberseite 214 des Gehäuses 210 drehbar gelagert, wobei das endlose Förderband 240 so angeordnet ist, dass sich die Umlenkrollen 220 innerhalb des endlosen Förderbands 240 befinden und das endlose Förderband 240 straff an den Umlenkrollen 220 anliegt, um Kräfte zwischen dem endlosen Förderband 240 und den Umlenkrollen 220 übertragen zu können.

Der Antrieb 230 des Förderbands 200 ist in der vorliegenden Ausführungsform innerhalb des Gehäuses 210 angeordnet, wobei der Antrieb 230 in der Lage ist, zumindest eine der Umlenkrollen 220 und somit auch das endlose Förderband 240 anzutreiben. Bei dem Antrieb 230 handelt es sich bspw. um einen elektrischen Antrieb, wobei bspw. auch ein magnetischer Antrieb realisierbar ist. In einer weiteren Ausführungsform treibt der Antrieb 230 des Förderbands 200 das endlose Förderband 240 an, wobei die Umlenkrollen 220 antriebslos sind. Zudem kann der Antrieb 230 oder Teile des Antriebs 230 zwischen den Umlenkrollen 220 angeordnet werden, wodurch Platz eingespart werden kann.

Der Endlosförderer 200 dient hierbei zum Transportieren des Produkts P in die Reichweite des Roboters R. Auf einem produktfördernden Abschnitt des endlosen Förderbands 240, welches als Produktauflage PA dient, wird das von der Greifvorrichtung 100 aufzunehmende Produkt P in eine Bewegungsrichtung X gefördert, welche in Richtung der Reichweite des Roboters R weist. Dabei wird das aufzunehmende Produkt P von dem Endlosförderer 200 in eine Aufnahmeposition A transportiert, in der der Roboter R das Produkt P aufnimmt.

Des Weiteren zeigt die Figur 1 eine Verarbeitungsmaschine 300, die in der vorliegenden Ausführungsform eine Portioniermaschine 300 ist. Die Portioniermaschine 300 ist so angeordnet, dass der Roboter R in der Lage ist, das Produkt P in ein aufrechtstehendes Magazinrohr bzw. Formrohr 310 der Portioniermaschine 300 einzuwerfen. Das Magazinrohr bzw. Formrohr 310 muss dabei nicht aufrechtstehend angeordnet sein. Es kann beispielweise auch in einem spitzen Winkel bezüglich der Mittelachse/Vertikalen der das Magazinrohr bzw. Formrohr 310 enthaltenen Formrohrsegmente angeordnet werden.

Unter einem aufrechtstehenden Magazinrohr 310 ist hierbei also auch ein Magazinrohr 310 zu verstehen, welches zumindest so stark geneigt ist, dass das Produkt P, nachdem das Produkt P von der Greifvorrichtung 100 abgegeben wurde, ohne Hilfsmittel in das Magazinrohr 310 fällt.

Beispielsweise kann das Magazinrohr 310 im Wesentlichen säulenartig ausgebildet sein und/oder einen zylindrischen Querschnitt besitzen und beispielsweise ovale Durchgangsschächte zum Durchführen des Lebensmittel-Produkts aufweisen. In der Regel ist das Magazinrohr vertikal ausgerichtet, sodass auch die Durchgangsschächte vertikal orientiert sind. Wie erwähnt, können die Durchgangsschächte auch in eine gewisse Neigung zur vertikalen Achse der Portioniermaschine 300 aufweisen.

Die Portioniermaschine 300 weist hierbei eine Abgabeposition B auf, an der das Produkt P abgegeben werden soll, wobei sich die Abgabeposition B direkt über einem Magazinrohr 310 befindet. Das Magazinrohr 310 dient zum Befördern des Produkts P in Richtung einer Portioniereinheit der Portioniermaschine 300, welche das Produkt P portioniert.

Die Anordnung des Roboters R, an dem die Greifvorrichtung 100 angebracht ist, der Transportvorrichtung 200 und der Verarbeitungsmaschine 300 kann je nach Gegebenheit angepasst werden. Die Anordnung ist zumindest so zu wählen, dass die an dem Roboter R angebrachte Greifvorrichtung 100 das zu ergreifende Produkt P von der Transportvorrichtung 200 aufnehmen und in das Magazinrohr bzw. Formrohr 310 der Portioniermaschine 300 einwerfen kann.

Die Figuren 3 bis 5 zeigen verschiedene Ansichten der erfindungsgemäßen Greifvorrichtung 100. Die Greifvorrichtung 100 weist im Wesentlichen eine quaderförmige Grundstruktur 110, zwei Greifelemente 120, Antriebsmittel 130 für ein translatorisches Verfahren der Greifelemente 120 und eine Anschlagplatte 140 auf.

Die Figur 3 zeigt eine perspektivische Ansicht der Greifvorrichtung 100. Die Greifvorrichtung 100 besteht hierbei aus einer im Wesentlichen quaderförmigen, länglichen Grundstruktur 110, die vorzugsweise aus Edelstahl oder einem anderen lebensmitteltauglichen Material hergestellt ist und entsprechend den auftretenden Belastungen aus einem Vollmaterial oder einem in Quaderform gebogenen Material bzw. Blech besteht. Des Weiteren kann die Grundstruktur 110 eine Beschichtung aufweisen, die das Material schützt und/oder zur Lebensmitteltauglichkeit der Grundstruktur 110 führt.

Die quaderförmige Grundstruktur 110 weist eine zum Endflansch E des Roboters R weisende Fläche 110a, eine parallel gegenüberliegende, vom Endflansch E des Roboters R wegweisende Fläche 110b, zwei sich gegenüberliegende Seitenflächen 110c, eine Vorder- und eine Rückfläche 110d auf, wobei die beiden Seitenflächen 110c sowie die Vorder- und Rückfläche 110d die beiden Flächen 110a, 110b miteinander verbinden. Dabei sind die Vorderfläche 110d und entsprechend die gegenüberliegende Rückfläche 110d rechteckförmig ausgestaltet, wobei deren Länge und Breite zumindest annährend geometrisch ähnlich sind. Demgegenüber besitzen die beiden Seitenflächen 110c, die zum Endflansch E weisende Fläche 110a und die vom Endflansch E wegweisende Fläche 110b der Grundstruktur 110 eine Länge, die um ein Vielfaches größer ist als die Länge oder Breite der Vorder- bzw. Rückfläche 110d der Grundstruktur 110. Dabei hängt die Länge der senkrecht zur Vorder- und Rückfläche 110d stehenden Flächen 110a, 110b, 100c der Grundstruktur 110 im Wesentlichen von der Länge des aufzunehmenden Produkts P ab.

Die Grundstruktur 110 ist an ihrer Seite, die in dem an dem Roboter R montierten Zustand zu dem Roboter R weist, mittels eines an der Grundstruktur 110 befestigtem Kopplungselements 112 am Endflansch E des Roboters R lösbar angebracht. Das Kopplungselement 112 ist hierbei mittig auf der zum Endflansch E des Roboters weisenden Fläche 110a der Grundstruktur 110 angebracht, wobei das Kopplungselement 112 das lösbare Anbringen an dem Roboter R ermöglicht. Das Kopplungselement 112 ist hierbei fest mit der Grundstruktur 110 verbunden und weist an seinem freien Ende einen im Wesentlichen scheibenförmigen, nicht näher bezeichneten Verbindungsabschnitt auf, der mit dem Endflansch E des Roboters R, bspw. mittels Schrauben, lösbar verbunden werden kann.

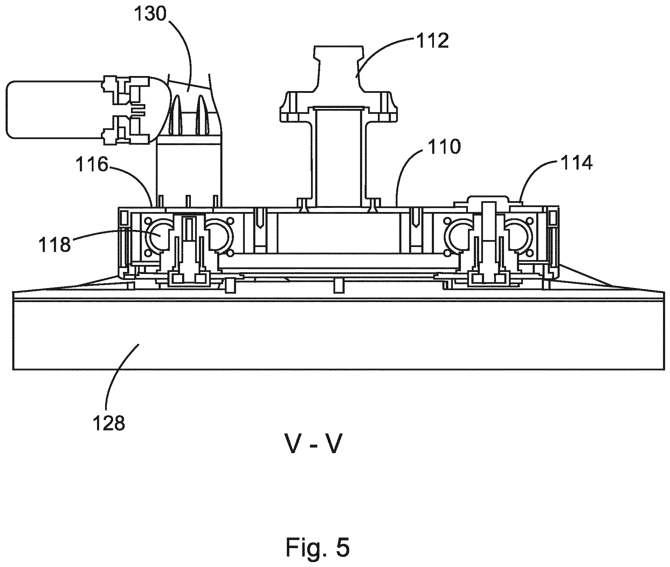

In den Seitenflächen 110c der Grundstruktur 110 sind jeweils vier, im Wesentlichen zirkulare oder kreisförmige Öffnungen 114 eingelassen bzw. eingearbeitet. Wie in der Schnittansicht der Figur 5 gezeigt ist, sind die Öffnungen 114 in Längsrichtung mittig zu den Seitenflächen 110c der Grundstruktur 110 angeordnet.

Zudem sind vorteilshafterweise seitlich an den jeweiligen Endabschnitten der Öffnungen 114 beidseitig Zylinderverlängerungsstutzen 116 bzw. Führungsbuchsen angebracht, die so angeordnet sind, dass sie senkrecht zu den Seitenflächen 110c der Grundstruktur 110 ausgerichtet sind und seitlich die jeweiligen axialen Längen der Grundstruktur 110 vergrößern. Dabei sind die Zylinderverlängerungsstutzen 116 so ausgerichtet, dass sie parallel zur Vorder- und Rückseite 11 0d, sowie zur zum Endflansch E weisenden Fläche 110a und zur vom Endflansch E wegweisenden Fläche 110b stehen.

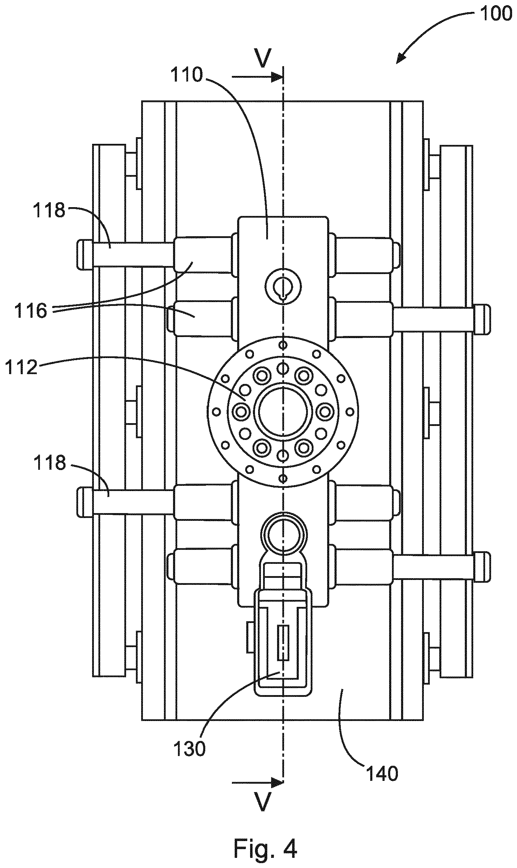

Figur 4 zeigt eine Draufsicht der Greifvorrichtung 100. Dabei sind die Zylinderverlängerungsstutzen 116 so angeordnet, dass jeweils vier Zylinderverlängerungsstutzen 116 an einem Endabschnitt der Seitenflächen 110c der Grundstruktur 110 vorhanden sind. Dabei sind jeweils abwechselnd zwei zugehörige Zylinderverlängerungsstutzen 116 einem der Greifelemente 120 und die nächstliegenden Zylinderverlängerungsstutzen 116 dem anderen Greifelement 120 zugehörig.

Insbesondere aus der Figur 5 ist ersichtlich, dass die Zylinderverlängerungsstutzen 116 im Wesentlichen parallel zur zum Endflansch E weisenden Fläche 110a und vom Endflansch E wegweisenden Fläche 110b der Grundstruktur 110 eingelassen sind.

In jeweils zwei Zylinderverlängerungsstutzen 116 ist jeweils ein zylindrischer, axial reversibel verfahrbarer Kolben 118 bzw. eine Führungsstange 118 aufgenommen, der bzw. die vorteilhafterweise eine axiale Länge aufweist, die größer als die axiale Länge zwischen zwei gegenüberliegenden Zylinderverlängerungsstutzen 116 ist. In der vorliegenden Ausführungsform sind jeweils zwei Führungsstangen 118 bzw. vier Zylinderverlängerungsstutzen 116 einem Greifelement 120 zugeordnet.

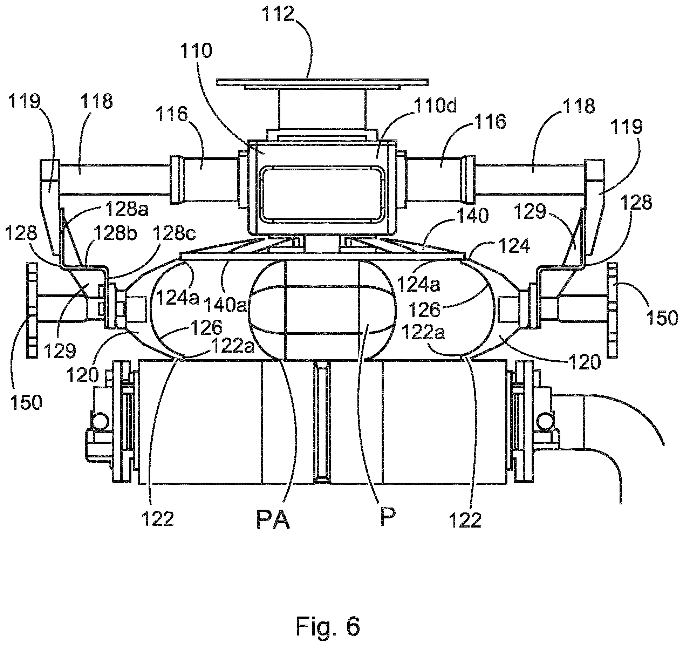

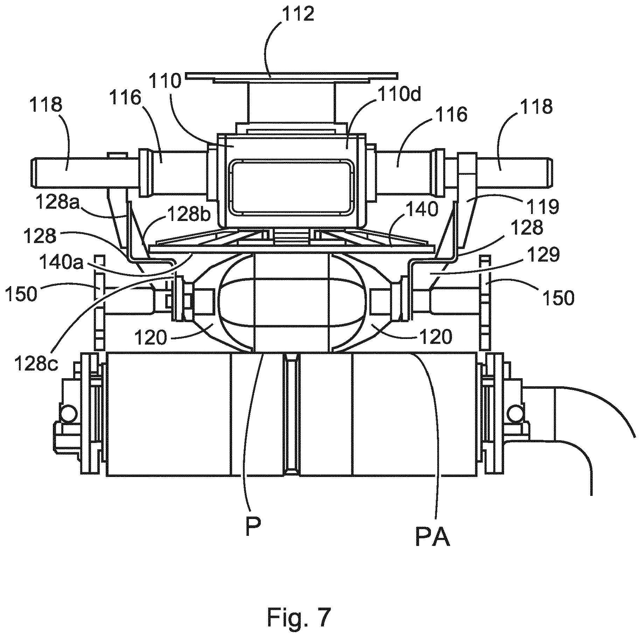

Die Führungsstangen 118 dienen hierbei zum reversiblen Aus- und Einfahren der Greifelemente 120 der Greifvorrichtung 100, wie dies in den Figuren 6 und 7 gezeigt ist und nachstehend noch näher erläutert werden wird. Dabei werden die Führungsstangen 118 innerhalb der Zylinderverlängerungsstutzen 116 durch ein im nachfolgenden ebenfalls näher beschriebenes Antriebsmittel 130 hin- und herbewegt.

Der Antrieb der vier Führungsstangen 118 wird mit einem Servomotor über eine Verzahnung vorzugsweise über eine Zahnstange oder einen Spindeltrieb ausgeführt. Dabei werden die zwei der Vorderseite 110d der Grundstruktur 110 am nächsten liegenden Führungsstangen 118 mittels eines Antriebsmittels 130 angetrieben und die zwei der Rückseite 110d der Grundstruktur 110 am nächsten liegenden Führungsstangen 118, die über einen Riementrieb mit dem Antriebsmittel 130 verbunden sind, ebenfalls angetrieben, wodurch die Führungsstangen 118 eine synchrone Bewegung ausführen.

Wie dies aus den Figuren 6 und 7 ersichtlich ist, dienen die Zylinderverlängerungsstutzen 116 einerseits zur Führung der Führungsstangen 118 und andererseits ermöglichen sie eine größere Greiföffnungsbreite, um je nach Gegebenheit größere oder kleinere Produkte P zu greifen. Gleichzeitig kann die Grundstruktur 110 in ihren räumlichen Abmessungen klein gehalten werden. Die maximale Greiföffnungsbreite der Greifvorrichtung 100 an die Breite des Produkts P anzupassen, führt zum einen zu einer möglichst kompakten Bauweise der Greifvorrichtung 100 und zum anderen zu verkürzten Taktzeiten, da beim Schließen bzw. Öffnen der Greifvorrichtung 100 die Greifelemente 120 eine kürzere Strecke zurücklegen müssen.

Wenn sich die Greiföffnungsbreite der Greifvorrichtung 100 vergrößern soll, werden dafür längere Führungsstangen 118 benötigt. Dies führt bei geöffneter Stellung der Greifelemente 120 der Greifvorrichtung 100, durch die ausgefahrene Führungsstange 118, zu höheren Hebelkräften am Austrittspunkt der Führungsstange 118 (hier: Seitenflächen 110c der Grundstruktur 110). Diese können durch die Verwendung von Zylinderverlängerungsstutzen 116, die den Angriffspunkt der Hebelkraft verschieben, vermindert bzw. abgeschwächt werden.

Zudem ist an den freien Enden jeweils zweier zu einem Greifelement 120 gehörender Führungsstangen 118 mittels jeweils zwei Verbindungselementen 119 ein Seitenblech 128 im Wesentlichen senkrecht zu den Führungsstangen 118 angebracht, wobei das jeweilige freie Ende der Seitenbleche 128 vom Endflansch E des Roboters R wegweist.

Die Verbindungselemente 119 weisen an einem Ende eine zylindrische Einbuchtung auf, die jeweils auf die Führungsstangen 118 gesteckt und bspw. verpresst oder verschraubt werden kann. Um die Führungsstange 118 mit dem Verbindungselement 119 zu verbinden, können zudem Mittel, wie bspw. Kleben, Schweißen oder Löten verwendet werden.

Das Verbindungselement 119 besteht bspw. aus Edelstahl oder einem anderen lebensmitteltauglichen Material. Des Weiteren kann das Verbindungselement 119 eine Beschichtung aufweisen, die das Material schützt und/oder zur Lebensmitteltauglichkeit des Verbindungselements führt.

Das Verbindungselement 119 dient zur Übertragung der linearen Bewegung der Führungsstangen 118 auf die, an den freien Enden der Verbindungselemente 119 angebrachten, Seitenbleche 128. Dabei werden die Seitenbleche 128 mit den Verbindungselementen 119 vorzugsweise verschweißt, verklebt oder verschraubt.

Die Seitenbleche 128 sind durch ein mehrfach abgekantetes Winkelblech gebildet, wobei ein erster Abschnitt 128a, der mit dem Verbindungselement 119 fest verbunden ist, im Wesentlichen, bezogen auf Figur 6, vertikal, ein zweiter Abschnitt 128b im Wesentlichen horizontal und ein dritter Abschnitt 128c im Wesentlichen vertikal verläuft, so dass sich eine treppenstufenähnliche Ausgestaltung für ein Seitenblech 128 ergibt. Der erste und dritte Abschnitt 128a, 128c weisen eine größere Breite auf als der zweite Abschnitt 128b. Eine erste Abkantungslinie liegt bei ungefähr einem Drittel der Breite des Seitenblechs 128 und die zweite Abkantungslinie bei ungefähr zwei Dritteln der Breite des Seitenblechs 128.

Um eine ausreichende Steifigkeit der Seitenbleche 128 unter Last gewährleisten zu können, sind die treppenförmigen Seitenbleche 128 je nach Anforderung und Belastung mit Querstreben bzw. quer stehenden Blechen verstärkt. Die Querstreben 129 bzw. quer stehenden Bleche sind hierbei so angeordnet, dass sie die im Wesentlichen senkrecht gebogenen Abschnitte der Seitenbleche 128 verstärken.

Die zwei Seitenbleche 128 sind im Wesentlichen einander gegenüberliegend angeordnet, wobei sich zwischen den Seitenblechen 128 teilweise die Grundstruktur 110 befindet. Dabei ist an den Seitenblechen 128 wiederum an deren freien Enden in Längsrichtung jeweils ein Greifelement 120 angebracht, das vorteilhafterweise mittels mindestens eines werkzeuglos lösbaren Befestigungsmittels 150, wie bspw. einem Arretierverschluss oder einem händisch betätigbaren Schraubverschluss, befestigt ist. Naturgemäß können auch nicht werkzeuglos lösbare Befestigungsmittel wie bspw. Verschrauben oder Verschweißen verwendet werden, um das Seitenblech 128 mit dem Greifelement 120 zu verbinden.

In der vorliegenden Ausführungsform sind in Längsrichtung mehrere Befestigungsmittel 150 bzw. Schraubverschlüsse in Reihe angebracht, die die Greifelemente 120 an den Enden der Seitenblechen 128, die von dem Endflansch E des Roboters R wegweisen, befestigen. Selbstverständlich kann auch jeweils nur ein Befestigungsmittel 150 pro Greifelement 120 vorgesehen sein.

Die Greifflächen 126 der Greifelemente 120 weisen im Wesentlichen eine sich in Längsrichtung erstreckende C-förmige Ausgestaltung auf, wobei die Greifelemente 120 so angeordnet sind, dass ihre C-förmigen bzw. konkaven Greifflächen 126 zueinander weisen. Die Greifflächen 126 können glatte als auch wellenförmige bzw. geriffelte oder längs- bzw. quergenutete Oberflächenstrukturen aufweisen.

Die Greifelemente 120 bestehen bspw. aus Edelstahl, Kunststoff oder einem anderen lebensmitteltauglichen Material. Des Weiteren können die Greifelemente 120 eine Beschichtung aufweisen, die das Material schützt und/oder zur Lebensmitteltauglichkeit der Greifelemente 120 führt.

Die axiale Länge der Greifelemente 120 richtet sich vorzugsweise nach der Länge des zu greifenden Produkts P. In der vorliegenden Ausführungsform ist die Länge der Greifelemente 120 geringfügig größer als die des zu greifenden Produkts P, wie dies bspw. in der Figur 3 gezeigt ist.

Zum reversiblen, translatorischen Bewegen der Greifelemente 120 in Richtung des gegenüberliegenden Greifelements 120 sind jedem Greifelement 120 zumindest eine Führungsstange 118, vorzugsweise zwei Führungsstangen 118, zugeordnet, die beispielsweise pneumatisch, servopneumatisch, hydraulisch oder durch einen elektrischen Antrieb betätigbar sind.

Wie bereits erwähnt, kann grundsätzlich nur jeweils eine Führungsstange 118 und/oder ein Antrieb 130 zum Bewegen der Greifelemente 120 vorgesehen sein. Aufgrund der Länge der Greifelemente 120 sind jedoch zumindest vier Zylinderverlängerungsstutzen 116 und zwei Führungsstangen 118 pro Greifelement 120 vorteilhaft, da diese als Führung dienen können und so eine ungewollte Verdrehung der Greifelemente 120 vermieden wird.

Mittels Antriebsmitteln 130, welche die Führungsstangen 118 in den Zylinderverlängerungsstutzen 116 antreiben, können die Greifelemente 120 aus einer ersten offenen Position, in welcher die Greifelemente 120 auf gegenüberliegenden Seiten des aufzunehmenden Produkts P positionierbar sind und damit vorzugsweise ihren größten Abstand zueinander aufweisen (Figur 6), in eine zweite geschlossene Position reversibel und translatorisch aufeinander zubewegt werden, in welcher die Greifelemente 120 das aufzunehmende Produkt P greifen bzw. ergreifen (Figur 7). Die Figuren 6 und 7 zeigen hierbei die Greifvorrichtung 100 in geöffneter und in geschlossener Stellung. Die geöffnete und geschlossene Stellung können variabel mittels des Antriebsmittels 130 bzw. Servomotors 1130 eingestellt werden.

Der beispielsweise als Servomotor 130 ausgebildete Motor kann mit den Greifelementen 120 gekoppelt sein, um deren Bewegung zu steuern, eine auf das zu verpressende Produkt aufzubringende Presskraft einzustellen und/oder das von den Greifelementen 120 aufgenommene und gegebenenfalls verpresste Produkt an eine gewünschte Weiterverarbeitungsstation, wie beispielsweise eine Fleischportionierungsmaschine, zu verbringen. Der Servomotor 130 kann dazu eingerichtet sein, eine Presskraft von wenigstens 100N, wenigstens 500 N, wenigstens 1000 N, wenigstens 1500 N, wenigstens 2000 N, wenigstens 2500 N oder wenigstens 3000 N bereitzustellen.

Durch den Servomotor 130 kann flexibel auf verschiedene Produktabmessungen reagiert werden, sodass mittels der erfindungsgemäßen Greifvorrichtung Produkte verschiedener Abmessung und/oder Konsistenz ergriffen und gehandhabt werden können. Vor allem im Hinblick auf die Handhabung von Rohprodukten, welche im gefrorenen oder zumindest angefrorenen Zustand ergriffen und weiterverarbeitet werden müssen, hat sich der Einsatz des Servomotor 130 als vorteilhaft erwiesen. Zum einen besitzen die zu handhabenden Produkte ein hohes Gewicht und zum anderen ist zum formgebenden Verpressen des (an)gefrorenen Produktes eine erhebliche Kraft notwendig, welche auf einfache Weise mittels des Motors bereitgestellt bzw. eingestellt werden kann. Natürlich ist aber auch eine Handhabung von nicht (an)gefrorenen Rohprodukten möglich.

Dabei übertragen die sich in den Zylinderverlängerungsstutzen 116 bewegenden Führungsstangen 118 ihre lineare Bewegung an die Verbindungselemente 119, an die Seitenbleche 128 und somit auch an die daran angebrachten Greifelemente 120. Vorteilhafterweise agieren die Greifelemente 120 parallelgreifend, d.h. die Greifelemente 120 bewegen sich beim Schließen und Öffnen synchron aufeinander zu bzw. voneinander weg. Selbstverständlich können die Greifelemente 120 auch sequentiell betätigt werden oder nur ein Greifelement 120 wird auf das andere, dann vorzugsweise feststehende Greifelement 120 reversibel zubewegt.

Die Greifelemente 120 weisen jeweils eine Unterseitenfläche 122 und eine Oberseitenfläche 124 auf, wobei die Oberseitenflächen 124 der Greifelemente 120 in Richtung der Grundstruktur 110 der Greifvorrichtung 100 weisen und die Unterseitenflächen 122 der Greifelemente 120 von der Grundstruktur 110 der Greifvorrichtung 100 wegweisen.

Die Greifelemente 120 können beispielsweise eine schalenartige Form besitzen und/oder konkav gekrümmt sein. Ferner können die Oberseitenfläche 124 und die Unterseitenfläche 122 der Greifelemente 120 aus einem Stück hergestellt sein. Die Greifelemente 120 untergreifen gemäß der in den Figuren abgebildeten beispielhaften Ausführungen das aufgenommene Produkt nur teilweise, sodass stets ein Kontakt zwischen dem Produkt und der Produktauflage PA besteht. In einer weiteren beispielhaften Ausführung besitzen die Greifelemente 120 im Querschnitt eine L-förmige Struktur. Dabei können die Oberseitenflächen 124 sich geradlinig erstrecken. Des Weiteren können auch die Unterseitenflächen 122 abschnittsweise geradlinig ausgebildet sein, wobei eine an die jeweilige Oberseitenfläche 124 anschließende Flanke sich parallel zu den Oberflächenseitenflächen erstreckt und/oder eine auf der Produktauflage PA auszulegende Bodenflanke im Wesentlichen lotrecht bezüglich der anderen Flanke orientiert ist. Dabei kann die Dimensionierung der Bodenflanke größer sein als die Dimensionierung der anderen Flanke und gegebenenfalls zusätzlich der Oberseitenfläche 124.

Die Anschlagplatte 140 ist zumindest an einer den Greifelementen 120 zugewandten Seite, insbesondere Unterseite, im Wesentlichen eben und/oder flächig ausgebildet sein (vgl. Fig. 6 und Fig. 7). Die Anschlagplatte 140 kann dazu dienen, dass das von den Greifelementen 120 aufzunehmende Produkt während des Ergreifens des Produkts durch die Greifelemente 120 nicht seitlich nach oben ausweichen kann. Wie aus einer Zusammenschau der Fig. 6 und Fig. 7 hervorgeht, ist die Anschlagplatte 140 dazu ausgelegt, sowohl im geöffneten Zustand der Greifelemente 120 (Fig. 6) als auch in der geschlossenen Position (Fig. 7) auf den Oberseitenflächen 124 der Greifelemente aufzuliegen. Die Anschlagplatte 140 ist so dimensioniert und/oder eine Abmessung der Anschlagplatte 140 so in Bezug auf einen maximalen horizontalen Abstand der Greifelemente 120 zueinander und/oder auf eine Bewegungsamplitude der Greifelemente 120 abgestimmt, dass die Anschlagplatte 140 in der ersten Position und in der zweiten Position auf den Oberseitenflächen 124 der Greifelemente 120 aufliegt.

Das mindestens eine Antriebsmittel 130 ist auf der zum Endflansch E weisenden Seite der Grundstruktur 110 mittig zwischen zwei nebeneinanderliegenden Führungsstangen 118, die jeweils zwischen dem Kopplungselement 112 liegen, wie in Figur 4 gezeigt, angebracht. Mittels einer Öffnung in der zum Endflansch E weisenden Seite der Grundstruktur 110 wird das Antriebsmittel 130 zu den anzutreibenden Führungsstangen 118 geführt.

Hierbei werden die Führungsstangen 118 vorzugsweise mit einem Servomotor und Zahnstangen angetrieben. Auch kann die Führungsstange 118 als Zahnstange ausgebildet sein. Des Weiteren können die Führungsstangen 118 optional auch bspw. mit Hilfe einer Gewinde-, Kugelumlauf- oder metrischen Gewindespindel anstelle einer Zahnstange angetrieben werden. Zudem kann anstelle der Zahnstange auch ein sog. Kurbeltrieb zum Antreiben der Greifelemente 120 verwendet werden.

In der vorliegenden Ausführungsform genügt ein Antrieb 130, um die Greifelemente 120 zu bewegen, wobei zwei Führungsstangen 118 mittels des Antriebs 130 angetrieben werden und die anderen zwei Führungsstangen 118 über einen Zahnriementrieb mit den angetriebenen Führungsstangen 118 verbunden sind und somit ebenfalls angetrieben werden. In einigen Ausführungsformen können jedoch zwei Antriebsmittel 130 vorgesehen sein, wobei jeweils ein Antriebsmittel 130 zwei Führungsstangen 118 antreibt. Wie der Figur 4 zu entnehmen ist, ist für das zweite Antriebsmittel 130 bereits eine entsprechende Öffnung in der zum Endflansch E des Roboters weisenden Fläche 110a der Grundstruktur 110 vorgesehen.

Zudem kann in einer weiteren Ausführungsform ein Kupplungselement vorgesehen sein, welches jeweils zwei zu einem Greifelement 120 gehörende Führungsstangen 118 verbindet. Hierdurch kann eine Ansteuerung zweier zusammengehöriger Führungsstangen 118 mittels eines Antriebsmittels 130 realisiert werden.

Auf der vom Endflansch E wegweisenden Seite 110b der Grundstruktur 110 ist die im Wesentlichen rechteckige Anschlagplatte 140 angebracht. Dabei weist die Anschlagplatte 140 eine Breite, die zumindest der maximalen Öffnungsbreite der Greifelemente 120 entspricht, und eine Länge auf, die vorzugsweise der axialen Länge der Greifelemente 120 entspricht. Die Anschlagplatte 140 ist hierbei so angeordnet, dass diese zumindest annähernd flächig auf den Oberseitenflächen 124 der Greifelemente 120 aufliegt.

Dabei sind die Greifelemente 120 als auch die Anschlagplatte 140 aus POM Food, Edelstahl oder Kunststoff gefertigt, wobei auch andere lebensmitteltaugliche Materialien möglich sind, die zudem den Belastungen während des Greifprozesses standhalten. Des Weiteren können die Greifelemente 120 und die Anschlagplatte 140 eine Beschichtung aufweisen, die das Material schützt und/oder zur Lebensmitteltauglichkeit der Grundstruktur 110 führt.

Dabei sind die Kanten 122a, 124a und/oder die Ober- und Unterseitenflächen 122, 124 der Greifelemente 120 vorteilhafterweise abgerundet, um die Reibung zwischen der Produktauflage PA und der Anschlagplatte 140 zu vermindern. Zusätzlich können die Greifelemente 120 entweder vollständig, oder partiell an ihren Kanten 122a, 124a, Ober- und Unterseitenflächen 122, 124 beschichtet sein, wobei die Beschichtung reibungsmindernd wirkt.

Vorteilhafterweise sind die Seitenbleche 128, an denen die Greifelemente 120 angebracht sind, so gebogen, dass sie während des Greifens einerseits nicht mit der Anschlagplatte 140 kollidieren und andererseits ein sicheres Greifen des Produkts P ermöglichen.

Wie bereits erläutert, weisen die Seitenbleche 128 eine treppenförmige Ausgestaltung auf, wobei die Seitenbleche 128 kostengünstig und einfach bspw. mittels einer Biegemaschine hergestellt werden können.

Zudem ist das Antriebsmittel 130 der Führungsstangen 118 in der Lage, das mittels der Greifelemente 120 aufgenommene Produkt P zu verpressen. Dabei erfolgt die Verpressung im Wesentlichen seitlich, wobei das Produkt P in eine vordefinierte Form gepresst wird. Zudem ist der Begriff Verpressung so zu verstehen, dass ein Pressen des Produktes P über die Haltekraft hinaus bewerkstelligt wird. Dabei wird das Produkt P in eine vordefinierte Form gepresst, so dass dieses anschließend bspw. in einen im Wesentlichen aufrechtstehenden Schacht oder in ein Form- bzw. Magazinrohr eingebracht werden kann.

Das Produkt P kann somit zum einen während des Förderns des Produkts P mittels des Handhabungsgeräts R verpresst werden. Dabei dient die Anschlagplatte 140 dazu, dass das zu verpressende Produkt P während des Pressvorgangs nicht seitlich nach oben ausweichen kann.

Zum anderen kann das zu verpressende Produkt P auf der Produktauflage PA verpresst werden. Dabei ist die Produktauflage PA bspw. eine fördernde Einrichtung wie ein Förderband oder eine andere Transporteinrichtung. Dies hat den Vorteil, dass die Produktauflage PA dafür sorgt, dass das zu verpressende Produkt P zudem nicht seitlich nach unten ausweichen kann. Der Pressvorgang kann direkt beim Greifen des Produkts P als auch während des Verfahrens des Handhabungsgeräts R durchgeführt werden.

In einer weiteren Ausführungsform sind die Greifelemente 120 translatorisch und/oder rotatorisch bewegbar. Mögliche Drehpunkte für die rotatorische Bewegung eines Greifelements 120 sind bspw. die Verbindungselemente 119, die zwischen den Führungsstangen 118 und den Seitenblechen 128 angeordnet sind, womit eine translatorische und rotatorische Bewegung der Greifelemente 120 möglich ist. Eine rein rotatorisch bewegbare Greifvorrichtung 100 kann bspw. durch einen scherenartigen Aufbau der Greifelemente 120 realisiert werden.

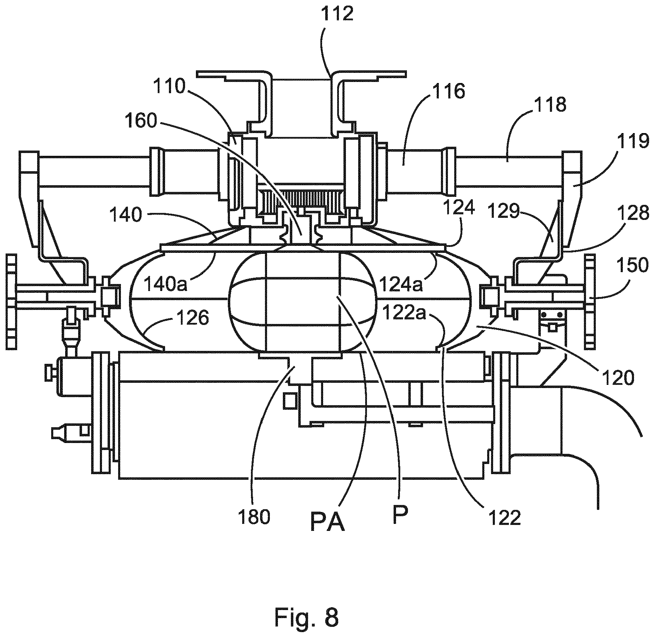

Figur 8 zeigt eine weitere Ausführungsform einer Greifvorrichtung 100 der vorliegenden Erfindung, dabei ist an der vom Endflansch E des Roboters R wegweisenden Seite 140a der Anschlagplatte 140 zumindest ein Saugelement 160 angeordnet. Vorzugsweise ist das zumindest eine Saugelement 160 mittig oder seitlich an der Anschlagplatte 140 angeordnet oder in diese eingelassen. Je nach Länge des Produkts P können mehrere Saugelemente 160 notwendig sein, die axial hintereinander mittig in Längsrichtung auf der Anschlagplatte 140 angeordnet sind.

Die Saugelemente 160 sind hierbei so ausgelegt, dass sie in der Lage sind, das aufzunehmende Produkt P zumindest teilweise von seiner Auflagefläche PA, wie beispielsweise einem Förderband, anzuheben. Dabei sind die Saugelemente 160 vorzugsweise so in die Anschlagplatte 140 eingelassen, dass diese während des Saugprozesses zumindest annähernd eine gerade Fläche mit der vom Endflansch E des Roboters R wegweisenden Seite 140a der Anschlagplatte 140 bilden.

Die Figur 8 zeigt zudem einen länglichen Ausheber 180, der unterhalb der Produktauflage PA angeordnet ist. Dabei kann im Folgenden der Ausheber 180 als System verstanden werden, wobei der Ausheber 180 unabhängig von der Präsenz des Saugelements 160 und des Roboters R eingesetzt bzw. angesteuert werden kann.

Der Ausheber 180 weist hierbei in Längsrichtung vorzugsweise eine T-förmige Ausgestaltung auf, wobei der Ausheber 180 vorzugsweise annähernd die Länge des aufzunehmenden Produkts P aufweist.

Dabei ist der längliche Ausheber 180 so unter der Produktauflage PA, die vorzugsweise ein Transportband ist, angeordnet, dass sich dieser zumindest zeitweise im Wesentlichen vollständig unterhalb des Produkts P befindet.

Der Ausheber 180 ist in der Lage, das Produkt P und die Produktauflage PA anzuheben, dies dient dazu, dass die Greifelemente 120 einfacher unter das Produkt P geschoben werden können und dieses somit untergreifen. Außerdem wird die Produktauflage PA beim Greifen nicht beschädigt, da die Greifelemente 120 nicht auf der Produktauflage PA aufliegen. Dabei kann der Ausheber 180 bspw. pneumatisch, elektrisch oder hydraulisch angesteuert werden.

Des Weiteren kann der Ausheber 180 unabhängig von dem Roboter R angesteuert werden und/oder mittels eines Auslösemechanismus, wie bspw. einer Lichtschranke, ausgelöst werden. Dabei ist der Auslösemechanismus so positioniert, dass das Produkt P diesen, an der Stelle, an der das Produkt P gegriffen werden soll, bzw. kurz danach, auslöst.

Optional kann an der Anschlagplatte 140 zusätzlich zumindest ein Erfassungsmittel 170 angebracht sein, welches erfasst bzw. detektiert, ob das Produkt P an der Anschlagplatte 140 anliegt und/oder ob das Saugelement 160 das Produkt P angesaugt hat bzw. ob der Ausheber 180 das Produkt P angehoben hat. Dabei kann das Erfassungsmittel 170 bspw. ein Druckschalter oder ein Sensor (nicht gezeigt) sein, der zumindest teilweise in die Anschlagplatte 140 eingelassen ist.

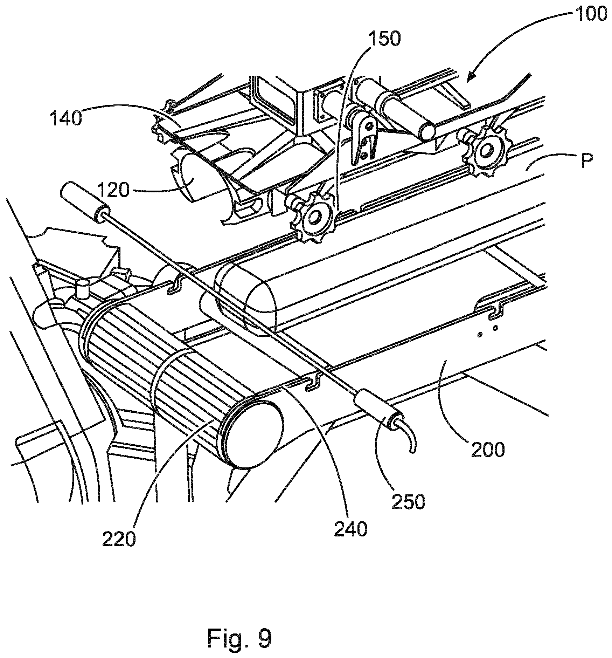

Wie in Figur 9 gezeigt, weist das System zudem ein erstes Erfassungsmittel 250, wie bspw. eine Lichtschranke 250, auf, das in der Lage ist, ein Produkt P zu erfassen, sobald dieses sich auf der Transportvorrichtung 200 bzw. dem Endlosförderer 200 in einer Aufnahmeposition A befindet. In der vorliegenden Ausführungsform ist die Lichtschranke 250 seitlich an dem Endlosförderer 200 angebracht.

Eine Lichtschranke 250 besteht im Wesentlichen aus einer Lichtstrahlenquelle 252, die den Sender 252 bildet, und einem Sensor 254, der den Empfänger 254 der Lichtstrahlen bildet. Der Sender 252 und der Empfänger 254 der Lichtschranke 250 sind im Wesentlichen senkrecht zur Bewegungsrichtung X des Förderbands 200 angeordnet. Des Weiteren ist die Lichtschranke 250 auf einer Höhe überhalb der Produktauflage PA des endlosen Förderbands 240 angeordnet, die so gewählt ist, dass diese kleiner als die Höhe bzw. Breite des aufzunehmenden Produkts P ist. Je nach Gegebenheit und Höhe des aufzunehmenden Produkts P, kann die Höhe der Lichtschranke 250 eingestellt werden.

Die Transportvorrichtung 200 bzw. der Endlosförderer 200 transportiert das aufzunehmende Produkt P entlang der Bewegungsrichtung X des Förderbands 200. Berührt das Produkt P nun den Lichtstrahl der Lichtschranke 250, löst dieses ein Signal aus, welches dem Roboter R mitteilt, das Produkt P zu ergreifen. Zusätzlich kann optional beim Durchfahren der Lichtschranke 250 der Endlosförderer 200 automatisch gestoppt werden, bis die Lichtschranke 250 keinen Gegenstand, wie das Produkt P oder die Greifelemente 120, mehr erfasst.

Das erste Erfassungsmittel 250 ist nicht auf eine Lichtschranke 250 beschränkt, vielmehr bestehen viele Möglichkeiten, ein Produkt P auf einer Produktauflage PA in einer vordefinierten Position zu erfassen, wie bspw. mittels eines kapazitiven Sensors, eines mechanischen Sensors oder eines bildgebenden Sensors. Des Weiteren ist die Anordnung des ersten Erfassungsmittels 250 nicht auf eine bestimmte Ausrichtung, bezogen auf die Transportvorrichtung 200, beschränkt. Eine Anordnung bspw. eines bildgebenden Sensors oberhalb oder schräg oberhalb der Transportvorrichtung 200 ist ebenfalls möglich.

Löst die Lichtschranke 250 also ein Signal aus, welches erfasst, dass das Produkt P sich in der Aufnahmeposition A befindet, fährt der Roboter R mittels der Greifvorrichtung 100 die Aufnahmeposition A an und ergreift das aufzunehmende Produkt P entweder im laufenden Betrieb des Förderbands 200 oder während dieses stillsteht.

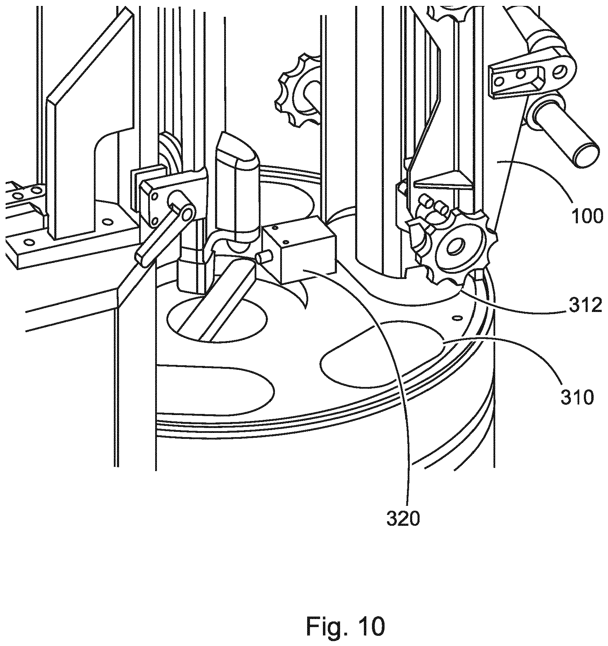

Figur 10 zeigt eine perspektivische Ansicht eines Ausschnitts der Greifvorrichtung 100 und der Portioniermaschine 300. Die Portioniermaschine 300 weist hierbei eine Abgabeposition B auf, an der das Produkt P abgegeben werden soll. Im Falle der Portioniermaschine 300 weist diese ein oder mehrere sog. Magazinrohre 310 auf, wovon eines das Abgabemagazinrohr 312 ist, in welches das Produkt P abgegeben werden soll. Das Magazinrohr 310 bzw. das Abgabemagazinrohr 312 weist vorzugsweise eine im Wesentlichen runde oder ovale Öffnung auf.

Die Abgabeposition B der Greifvorrichtung 100 befindet sich in der vorliegenden Ausführungsform direkt über dem Abgabemagazinrohr 312, wobei sich die Abgabeposition B vorzugsweise 10mm über dem Abgabemagazinrohr 312 befindet. Die Greifvorrichtung wird demnach so positioniert, dass die Greifelemente 120 in einer Flucht zu dem Abgabemagazinrohr 312 stehen, und somit ermöglichen, dass das Produkt P, nachdem sich die Greifvorrichtung 100 geöffnet hat, längs in das Abgabemagazinrohr 312 fällt.

Je nach Gegebenheit kann der Abstand zwischen der Greifvorrichtung 100 und dem Abgabemagazinrohr 312 variiert werden, um sicherzustellen, dass das Produkt P in das Abgabemagazinrohr 312 fällt.

An der Portioniermaschine 300 ist ein zweites Erfassungsmittel 320 wie bspw. ein kapazitiver Sensor 320 angebracht, der bspw. oberhalb bzw. auf dem Magazinrohr 310 angebracht ist. Der kapazitive Sensor 320 ist so ausgerichtet, dass dieser ein in der Abgabeposition B befindliches Produkt P, welches sich in der Greifvorrichtung 100 befindet, erfasst. Detektiert der kapazitive Sensor 320 ein Produkt P, übermittelt dieser ein Signal, welches dazu dient, die Greifelemente 120 der Greifvorrichtung 100 zu öffnen, sodass das Produkt P in das Abgabemagazinrohr 312 fällt bzw. rutscht.

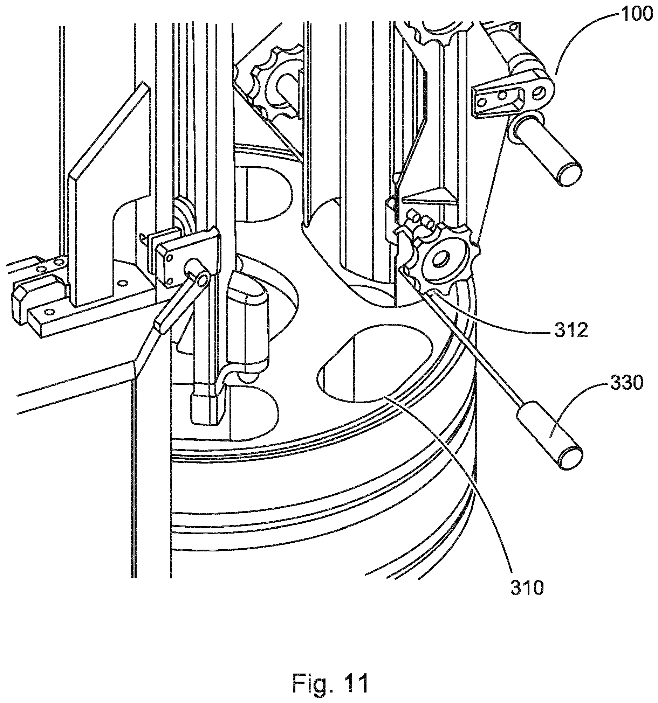

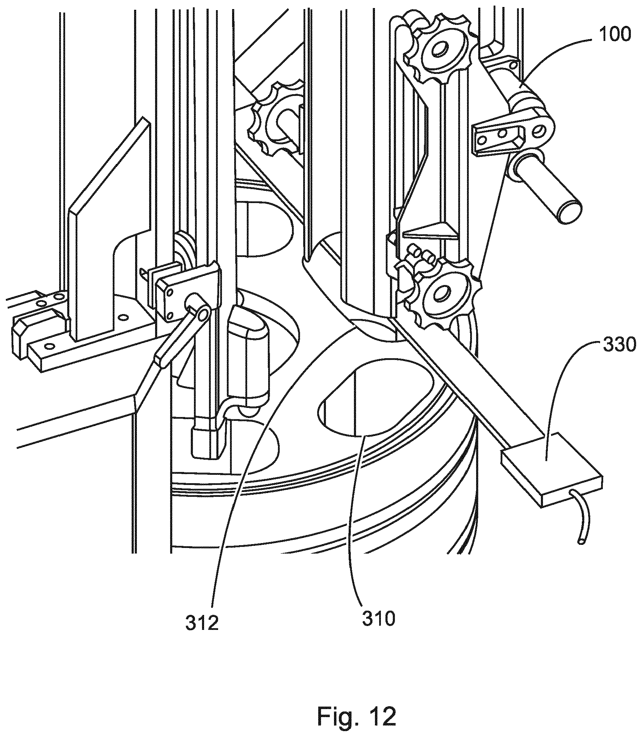

An der Portioniermaschine 300 ist ein drittes Erfassungsmittel 330 wie bspw. eine Lichtschranke oder ein Lichtvorhang angebracht, wie dies in den Figuren 11 und 12 gezeigt ist, das, wenn sich die Greifvorrichtung 100 in der Abgabeposition B ist, so angeordnet ist, dass dieses ein Produkt P zwischen der Greifvorrichtung 100 und dem Abgabemagazinrohr 312 erfasst.

Das dritte Erfassungsmittel 330 dient dazu, sicherzustellen, dass das Produkt P vollständig in das Abgabemagazinrohr 312 abgegeben wurde. Dazu können wiederum eine Vielzahl verschiedener Sensoren eingesetzt werden, wie bspw. eine Lichtschranke, wie im Zusammenhang mit Figur 9 bereits beschrieben, ein Lichtgitter, ein kapazitiver Sensor, ein mechanischer Sensor oder ein bildgebender Sensor.

Öffnet die Greifvorrichtung 100 ihre Greifelemente 120, so fällt das sich zwischen den Greifelementen 120 befindliche Produkt P in das Abgabemagazinrohr 312. Das dritte Erfassungsmittel 330 erfasst hierbei zunächst, dass sich ein Produkt P zwischen der Greifvorrichtung 100 und dem Abgabemagazinrohr 312 befindet, und misst anschließend bzw. zeitgleich, wie lange das Produkt P benötigt, um vollständig in das Abgabemagazinrohr 312 abgegeben zu werden. Dazu wird von dem Erfassungsmittel 330 überprüft, ob das Produkt P innerhalb einer vordefinierten Abwurfzeit von vorzugsweise 0,05s bis 1s in das Abgabemagazinrohr 312 abgegeben wurde.

Liegt die Abwurfzeit außerhalb der vordefinierten Zeitspanne, gibt das dritte Erfassungsmittel 330 eine Fehlermeldung aus, welche dazu führt, dass das System abgeschaltet wird bzw. in einen Ruhezustand versetzt wird, die manuell von einer Bedienperson behoben werden muss.

Das erste, zweite und dritte Erfassungsmittel 250, 320, 330 sind hierbei unabhängig voneinander je nach Gegebenheit einsetzbar. Dies bedeutet, dass das erste Erfassungsmittel 250 und/oder das zweite Erfassungsmittel 320 und/oder das dritte Erfassungsmittel 330 in dem System vorgesehen werden können.

Die Erfassungsmittel 250, 320, 330 sind nicht auf bestimmte Sensoren, wie oben bereits erläutert beschränkt, vielmehr bestehen viele Möglichkeiten, ein Produkt P zu erfassen, wie bspw. mittels eines kapazitiven Sensors, eines mechanischen Sensors oder eines bildgebenden Sensors. Des Weiteren ist die Anordnung der Erfassungsmittel 250, 320, 330 nicht auf eine bestimmte Ausrichtung beschränkt. Eine Anordnung bspw. eines bildgebenden Sensors oberhalb, schräg oberhalb oder seitlich des Systems ist ebenfalls möglich.

Im Folgenden wird ein Verfahren zum Steuern eines Systems zum Aufnehmen, Fördern und Abgeben eines Produkts P beschrieben, welches ein Handhabungsgerät R, eine an dem Handhabungsgerät R lösbar anbringbare Greifvorrichtung 100, eine Transportvorrichtung 200 und eine Steuereinheit 400 enthält. Zunächst wird das aufzunehmende Produkt P auf einer Produktauflage PA erfasst, dies geschieht bspw. durch ein erstes Erfassungsmittel 250 wie bspw. eine Lichtschranke. Das erste Erfassungsmittel 250 übermittelt ein Signal an den Roboter R, welcher sich anschließend mit geöffneten Greifelementen 120 der Greifvorrichtung 100 in eine erste Position positioniert, in welcher die Greifelemente 120 auf gegenüberliegenden Seiten des aufzunehmenden Produkts P positioniert sind. Ist die erste Position erreicht, ergreift der Roboter R mittels der Greifvorrichtung das aufzunehmende Produkt P, indem sich mindestens eines der Greifelemente 120 in die Richtung des Produkts P reversibel bewegt, bis eine zweite Position erreicht ist, in der das Produkt P von der Greifvorrichtung 100 ergriffen wurde. Anschließend wird das Produkt P in eine vordefinierte Form gepresst bzw. komprimiert oder mittels einer vordefinierten Kraft komprimiert, dies geschieht mittels der Greifelemente 120 und der Anschlagplatte 140 sowie ggf. der Produktauflage PA. Darauf folgend verfährt der Roboter R mit der Greifvorrichtung 100 und dem aufgenommenen Produkt P in eine vordefinierte Position, in der ein zweites Erfassungsmittel 320 überprüft, ob sich das Produkt P in der Greifvorrichtung 100 befindet. Anschließend werden die Greiferelemente 120 der Greifvorrichtung geöffnet und das Produkt P wird in ein Magazinrohr abgegeben, wobei die Abwurfzeit mittels eines dritten Erfassungsmittels 330 überwacht wird.

Zum einen kann das Produkt P bereits auf der Produktauflage PA mittels der Greifelemente 120, der Anschlagplatte 140 und der Produktauflage PA in eine vordefinierte Form gepresst werden. Zum anderen kann das Produkt P während des Verfahrens mittels der Greifelemente 120 und der Anschlagplatte 140 in eine vordefinierte Form gepresst werden, wodurch zusätzlich, durch das simultane Verfahren und Verpressen, die Taktzeit verkürzt werden kann.

### BEZUGSZEICHENLISTE

- A: Aufnahmeposition
- B: Abgabeposition
- R: Handhabungsgerät
- E: Endflansch
- F: Fundamentplatte
- P: Produkt
- PA: Produktauflage
- X: Bewegungsrichtung
- 100: Greifvorrichtung
- 110: Grundstruktur
- 110a: eine zum Endflansch des Roboters weisende Fläche der Grundstruktur
- 110b: eine vom Endflansch des Roboters wegweisende Fläche der Grundstruktur
- 110c: Seitenflächen der Grundstruktur
- 110d: Vorder- und Rückfläche der Grundstruktur
- 112: Kopplungselement
- 114: Öffnungen
- 116: Zylinderverlängerungsstutzen
- 118: Kolben
- 119: Verbindungselement
- 120: Greifelement
- 122: Unterseitenfläche
- 122a: Kante
- 124: Oberseitenfläche
- 124a: Kante
- 126: Greifflächen
- 128: Seitenblech
- 128a: erster Abschnitt des Seitenblechs
- 128b: zweiter Abschnitt des Seitenblechs
- 128c: dritter Abschnitt des Seitenblechs
- 129: Querstreben
- 130: Antriebsmittel
- 140: Anschlagplatte
- 140a: vom Endflansch des Roboters wegweisende Seite der Anschlagplatte
- 150: Befestigungsmittel
- 160: Saugelement
- 170: Erfassungsmittel
- 180: Ausheber
- 200: Transportvorrichtung
- 210: Gehäuse
- 212: Unterseite
- 214: Oberseite
- 216: Standfuß
- 220: Umlenkrollen
- 230: Antrieb
- 240: endloses Förderband
- 250: erstes Erfassungsmittel
- 252: Sender
- 254: Empfänger
- 300: Verarbeitungsmaschine
- 310: Magazinrohr
- 320: zweites Erfassungsmittel
- 330: drittes Erfassungsmittel
- 400: Steuereinheit

## Patentansprüche

1. System umfassend:
eine Lebensmittel-Portioniermaschine (300), die zumindest ein Magazinrohr (310) aufweist;
eine Transportvorrichtung (200) zum Fördern eines strangförmigen Lebensmittel-Produkts (P);
eine Greifvorrichtung (100) zum Aufnehmen des Lebensmittel-Produkts (P) von der Transportvorrichtung (200) und zum Abgeben des Lebensmittel-Produkts (P) an das Magazinrohr (310);
ein Handhabungsgerät (R) an dem die Greifvorrichtung (100) lösbar anbringbar ist;
wobei die Transportvorrichtung (200) einen Transportabschnitt aufweist, auf dem das von der Greifvorrichtung (100) aufzunehmende Lebensmittel-Produkt (P) in einer Aufnahmeposition (A) zum Aufnehmen des Lebensmittel-Produkts (P) durch die Greifvorrichtung (100) positionierbar ist, und
die Steuereinheit (400) zumindest mit dem Handhabungsgerät (R), der Greifvorrichtung (100) und der Transportvorrichtung (200) verbunden ist;
wobei die Steuereinheit dazu ausgelegt ist, das Erreichen der Aufnahmeposition (A) durch das aufzunehmende Lebensmittel-Produkt (P) zu erfassen.

2. System nach Anspruch 1, weiterhin enthaltend:
ein erstes Erfassungsmittel (250), das oberhalb der Transportvorrichtung (200) angebracht ist;
wobei das erste Erfassungsmittel (250) dazu ausgelegt ist, das Erreichen der Aufnahmeposition (A) auf der Transportvorrichtung (200) durch das aufzunehmende Lebensmittel-Produkt (P) zu erfassen.

3. System nach Anspruch 1 oder 2, weiterhin enthaltend:
ein zweites Erfassungsmittel (320);
wobei die Greifvorrichtung (100) über dem wenigstens einen Magazinrohr (310) in einer Abgabeposition (B) zum Abgeben des von der Greifvorrichtung (100) aufgenommenen Lebensmittel-Produkts (P) in das Magazinrohr (310) positionierbar ist; und
das zweite Erfassungsmittel (320) dazu ausgelegt ist, das durch die Greifvorrichtung (100) oberhalb des Magazinrohrs (310) positionierte Lebensmittel-Produkt (P) zu erfassen.

4. System nach einem der Ansprüche 1 bis 3, weiterhin enthaltend:
ein drittes Erfassungsmittel (330), das oberhalb des wenigstens einen Magazinrohrs (310) der Verarbeitungsmaschine (300) angebracht ist;
wobei das dritte Erfassungsmittel (330) dazu ausgelegt ist, ein in das Magazinrohr (310) fallendes Lebensmittel-Produkt (P) zu erfassen.

5. System nach einem der Ansprüche 1 bis 4,
wobei die Greifvorrichtung (100) enthält:
eine Grundstruktur (110), die an ein Handhabungsgerät (R) mittels eines Kopplungselements (112) vorzugsweise zerstörungsfrei lösbar anbringbar ist;
mindestens zwei Greifelemente (120), die jeweils wenigstens eine Unterseitenfläche (122) und mindestens eine Oberseitenfläche (124) aufweisen,
wobei die Oberseitenflächen (124) der Greifelemente (120) in Richtung des Kopplungselements (112) und die Unterseitenflächen (122) der Greifelemente (120) von dem Kopplungselement (112) wegweisen;
mindestens ein Antriebsmittel (130), um die Greifelemente (120) zwischen einer ersten Position, in welcher die Greifelemente (120) auf gegenüberliegenden Seiten des aufzunehmenden Lebensmittel-Produkts (P) positionierbar sind, und einer zweiten Position, in der die Greifelemente (120) das aufzunehmende Lebensmittel-Produkt (P) ergreifen, reversibel zu bewegen; und
eine Anschlagplatte (140), die zumindest annähernd auf den Oberseitenflächen (124) der Greifelemente (120) aufliegt.

6. System nach einem der Ansprüche 1 bis 5,
wobei die Greifelemente (120) der Greifvorrichtung (100) konkave Greifflächen (126) aufweisen, die in der Lage sind, das aufzunehmende Lebensmittel-Produkt (P) zumindest teilweise zu untergreifen und/oder
wobei zumindest eines der Greifelemente (120) bezüglich der Grundstruktur (110) translatorisch und/oder rotatorisch bewegbar ist.

7. System nach einem der Ansprüche 1 bis 6,
wobei die Greifelemente (120) mittels werkzeuglos lösbarer Befestigungsmittel (150) an der Greifvorrichtung (100) angebracht sind.

8. System nach einem der Ansprüche 1 bis 7,
wobei an der Anschlagplatte (140) zumindest ein Saugelement (160) angeordnet ist, das während eines Saugprozesses das aufzunehmende Lebensmittel-Produkt (P) zumindest teilweise anhebt, und
wobei das Saugelement (160) vorzugsweise so in die Anschlagplatte (140) eingelassen ist, dass dieses während des Saugprozesses zumindest annähernd eine gerade Fläche mit der Anschlagplatte (140) bildet.

9. System nach einem der Ansprüche 1 bis 8,
wobei jedes der Greifelemente (120) mittels zumindest zwei Führungsstangen (118) geführt wird und/oder
wobei die Greifelemente (120) der Greifvorrichtung (100) in der Lage sind, das Lebensmittel-Produkt (P) in eine vordefinierte Form zu verpressen.

10. System nach einem der Ansprüche 1 bis 9,
wobei ein Erfassungsmittel (170) an der Anschlagplatte (140) angebracht ist, das in der Lage ist, das Lebensmittel-Produkt (P) zu detektieren.

11. System nach einem der Ansprüche 1 bis 10,
wobei die Transportvorrichtung (200) einen Endlosförderer (200) aufweist, der mindestens zwei Umlenkrollen (220) und ein endloses Förderband (240) enthält,
wobei auf einem produktfördernden Abschnitt des Transportbands (200) das von der Greifvorrichtung (100) aufzunehmende Lebensmittel-Produkt (P) in eine Bewegungsrichtung (X) gefördert wird.

12. Verfahren zum Steuern eines Systems zum Aufnehmen, Fördern und Abgeben eines strangförmigen Lebensmittel-Produkts (P) an eine Lebensmittel-Portioniermaschine (300), die zumindest ein Magazinrohr (310) aufweist, enthaltend die folgenden Schritte:
Erfassen des aufzunehmenden Lebensmittel-Produkts (P) auf einer Lebensmittel-Produktauflage (PA) einer Transportvorrichtung (200);
Positionieren von Greifelementen (120) einer Greifvorrichtung (100) in eine erste Position, in welcher die Greifelemente (120) auf gegenüberliegenden Seiten des aufzunehmenden Lebensmittel-Produkts (P) positioniert sind;
Ergreifen des aufzunehmenden Lebensmittel-Produkts (P), indem sich mindestens eines der Greifelemente (120) in die Richtung des Lebensmittel-Produkts (P) reversibel bewegt, bis eine zweite Position erreicht ist;
Komprimieren des Lebensmittel-Produkts (P),
wobei das Lebensmittel-Produkt (P) mittels der Greifelemente (120) und einer Anschlagplatte (140) sowie ggf. der Lebensmittel-Produktauflage (PA) in eine vordefinierte Form gepresst wird;
Verfahren der Greifvorrichtung (100) mit dem Lebensmittel-Produkt (P) in eine vordefinierte Position; und
Abgeben des Lebensmittel-Produkts (P) in das Magazinrohr (310) der Lebensmittel-Portioniermaschine (300).

13. Verfahren zum Steuern eines Systems nach Anspruch 12,
wobei das Lebensmittel-Produkt (P) auf der Lebensmittel-Produktauflage (PA) des Transportbands (200) mittels der Greifelemente (120), der Anschlagplatte (140) und der Lebensmittel-Produktauflage (PA) in eine vordefinierte Form gepresst wird oder
wobei das Lebensmittel-Produkt (P) während des Verfahrens mittels der Greifelemente (120) und der Anschlagplatte (140) in eine vordefinierte Form gepresst wird.

14. Verfahren zum Steuern eines Systems nach Anspruch 12 oder 13,
wobei ein zweites Erfassungsmittel (320) vorgesehen ist, das das Lebensmittel-Produkt (P) in der Greifvorrichtung (100) erfasst, während sich dieses in der vordefinierten Position überhalb des Magazinrohrs (310) befindet.

15. Verfahren zum Steuern eines Systems nach einem der Ansprüche 12 bis 14,
wobei ein drittes Erfassungsmittel (330) vorgesehen ist, das eine Abwurfzeit erfasst,
wobei die Abwurfzeit einer Zeitspanne entspricht, die im Wesentlichen beim Abgeben des Lebensmittel-Produkts (P) durch die Greifvorrichtung (100) in das Magazinrohr (310) beginnt, und endet, sobald sich das Lebensmittel-Produkt (P) im Wesentlichen vollständig innerhalb des Magazinrohrs (310) befindet.

## Claims

1. A system comprising:
a food portioning machine (300) having at least one magazine tube (310);
a transport device (200) for conveying a strand-shaped food product (P);
a gripping device (100) for picking up the food product (P) from the transport device (200) and delivering the food product (P) to the magazine tube (310);
a handling device (R) to which the gripping device (100) is detachably attachable;
wherein the transport device (200) having a transport section on which the food product (P) to be picked up by the gripping device (100) can be positioned in a pick-up position (A) for picking up the food product (P) by the gripping device (100), and
the control unit (400) is connected at least to the handling device (R), the gripping device (100) and the transport device (200);
wherein the control unit is configured to detect the reaching of the pick-up position (A) by the food product (P) to be picked up.

2. The system according to claim 1, further comprising:
a first detection means (250) mounted above the transport device (200);
wherein said first detecting means (250) is configured to detect the food product (P) to be picked up reaching said pick-up position (A) on said transport device (200).

3. The system according to claim 1 or 2, further comprising:
a second detection means (320);
said gripping device (100) being positionable above said at least one magazine tube (310) in a dispensing position (B) for dispensing said food product (P) picked up by said gripping device (100) into said magazine tube (310); and
the second detection means (320) is configured to detect the food product (P) positioned above the magazine tube (310) by the gripping device (100).

4. The system according to one of claims 1 to 3, further comprising:
a third detection means (330) arranged above the at least one magazine tube (310) of the processing machine (300);
wherein the third detection means (330) is configured to detect a food product (P) falling into the magazine tube (310).

5. The system according to one of claims 1 to 4,
wherein the gripping device (100) comprises:
a base structure (110) that can be attached to a handling device (R) in a preferably non-destructively detachable manner, by means of a coupling element (112);
at least two gripping elements (120), each having at least one bottom surface (122) and at least one top surface (124),
wherein the top surfaces (124) of the gripping elements (120) face in the direction of the coupling element (112) and bottom surfaces (122) of the gripping elements (120) face away from the coupling element (112);
at least one drive means (130) for reversibly moving the gripping elements (120) between a first position in which the gripping elements (120) are positionable on opposite sides of the food product (P) to be picked up, and a second position in which the gripping elements (120) grip the food product (P) to be picked up; and
a stop plate (140) that at least approximately rests on the top surfaces (124) of the gripping elements (120).

6. The system according to one of claims 1 to 5,
wherein the gripping elements (120) of the gripping device (100) have concave gripping surfaces (126) which are capable of at least partially gripping under the food product (P) to be picked up, and/or
wherein at least one of the gripping elements (120) is translationally and/or rotationally movable with respect to the base structure (110).

7. The system according to one of claims 1 to 6,
wherein the gripping elements (120) are attached to the gripping device (100) by means of fastening means (150) which can be detached without tools.

8. The system according to one of claims 1 to 7,
wherein at least one suction element (160) is arranged on the stop plate (140), which at least partially lifts the food product (P) to be picked up during a suction process, and
wherein the suction element (160) is preferably embedded in the stop plate (140) such that it forms at least approximately a straight surface with the stop plate (140) during the suction process.

9. The system according to one of claims 1 to 8,
wherein each of the gripping elements (120) is guided by means of at least two guide rods (118), and/or
wherein the gripping elements (120) of the gripping device (100) are capable of pressing the food product (P) into a predefined shape.

10. The system according to one of claims 1 to 9,
wherein a detection means (170) is mounted on the stop plate (140), capable of detecting the food product (P).

11. The system according to one of claims 1 to 10,
wherein the transport device (200) comprises an endless conveyor (200) including at least two deflection rollers (220) and an endless conveyor belt (240),
wherein on a product conveying section of the conveyor belt (200) the food product (P) to be picked up by the gripping device (100) is conveyed in a direction of movement (X).

12. A method of controlling a system for picking up, conveying and delivering a strand-like food product (P) to a food portioning machine (300) having at least one magazine tube (310), comprising the following steps:
detecting the food product (P) to be picked up on a food product support (PA) of a transport device (200);
positioning gripping elements (120) of a gripping device (100) in a first position in which the gripping elements (120) are positioned on opposite sides of the food product (P) to be picked up;
gripping the food product (P) to be picked up by reversibly moving at least one of the gripping elements (120) in the direction of the food product (P) until a second position is reached;
compressing the food product (P),
wherein the food product (P) is pressed into a predefined shape by means of the gripping elements (120) and a stop plate (140) and, if applicable, the food product support (PA);
moving the gripping device (100) with the food product (P) into a predefined position; and
dispensing the food product (P) into the magazine tube (310) of the food portioning machine (300).

13. The method of controlling a system according to claim 12,
wherein the food product (P) is pressed into a pre-defined shape on the food product support (PA) of the conveyor (200) by means of the gripping elements (120), the stop plate (140) and the food product support (PA), or
wherein the food product (P), while being moved, is pressed into a predefined shape by means of the gripping elements (120) and the stop plate (140).

14. The method of controlling a system according to claim 12 or 13,
wherein a second detection means (320) is provided, which detects the food product (P) in the gripping device (100) while it is in the predefined position above the magazine tube (310).

15. The method of controlling a system according to one of claims 12 to 14,
wherein a third detection means (330) is provided which detects a drop time,
wherein the drop time corresponds to a period of time that starts substantially when the food product (P) is dispensed by the gripping device (100) into the magazine tube (310), and ends when the food product (P) is substantially completely inside the magazine tube (310).

## Revendications

1. Système comprenant :
une machine à diviser en portions des aliments (300) présentant au moins un tube de magasin (310) ;
un dispositif de transport (200) pour transporter un produit alimentaire en forme de boyau (P) ;
un dispositif de préhension (100) pour prendre le produit alimentaire (P) du dispositif de transport (200) et pour déposer le produit alimentaire (P) au tube de magasin (310) ;
un appareil de manipulation (R) sur lequel le dispositif de préhension (100) peut être monté de manière amovible ;
le dispositif de transport (200) présentant une section de transport sur laquelle le produit alimentaire (P) à prendre par le dispositif de préhension (100) peut être positionné dans une position de prise (A) pour la prise du produit alimentaire (P) par le dispositif de préhension (100), et
l'unité de commande (400) est reliée au moins à l'appareil de manipulation (R), au dispositif de préhension (100) et au dispositif de transport (200) ;
l'unité de commande étant conçue pour détecter si le produit alimentaire (P) à prendre atteint la position de prise (A).

2. Système selon la revendication 1, contenant en outre :
un premier moyen de détection (250) monté au-dessus du dispositif de transport (200) ;
dans lequel le premier moyen de détection (250) est conçu pour détecter si le produit alimentaire (P) à prendre atteint la position de prise (A) sur le dispositif de transport (200).

3. Système selon la revendication 1 ou 2, contenant en outre :
un deuxième moyen de détection (320) ;
dans lequel le dispositif de préhension (100) peut être positionné au-dessus de l'au moins un tube de magasin (310) dans une position de dépose (B) pour déposer le produit alimentaire (P) pris par le dispositif de préhension (100) dans le tube de magasin (310) ; et
le deuxième moyen de détection (320) est conçu pour détecter le produit alimentaire (P) positionné au-dessus du tube de magasin (310) par le dispositif de préhension (100).

4. Système selon l'une des revendications 1 à 3, contenant en outre :
un troisième moyen de détection (330) monté au-dessus de l'au moins un tube de magasin (310) de la machine de traitement (300) ;
dans lequel le troisième moyen de détection (330) est conçu pour détecter un produit alimentaire (P) tombant dans le tube de magasin (310).

5. Système selon l'une des revendications 1 à 4,
dans lequel le dispositif de préhension (100) contient :
une structure de base (110) qui peut être montée de manière amovible, de préférence sans destruction, sur un appareil de manipulation (R) au moyen d'un élément de couplage (112) ;
au moins deux éléments de préhension (120) qui présentent chacun au moins une surface latérale inférieure (122) et au moins une surface latérale supérieure (124),
les surfaces latérales supérieures (124) des éléments de préhension (120) étant orientées en direction de l'élément de couplage (112) et les surfaces latérales inférieures (122) des éléments de préhension (120) étant orientées à l'opposé de l'élément de couplage (112) ;
au moins un moyen d'entraînement (130) pour déplacer de manière réversible les éléments de préhension (120) entre une première position, dans laquelle les éléments de préhension (120) peuvent être positionnés sur des côtés opposés du produit alimentaire (P) à prendre, et une deuxième position, dans laquelle les éléments de préhension (120) prennent le produit alimentaire (P) à prendre ; et
une plaque de butée (140) qui repose au moins approximativement sur les surfaces latérales supérieures (124) des éléments de préhension (120).

6. Système selon l'une des revendications 1 à 5,
dans lequel les éléments de préhension (120) du dispositif de préhension (100) présentent des surfaces de préhension concaves (126) qui sont en mesure de prendre au moins partiellement par le dessous le produit alimentaire (P) à prendre et/ou
dans lequel au moins l'un des éléments de préhension (120) est mobile en translation et/ou en rotation par rapport à la structure de base (110).

7. Système selon l'une des revendications 1 à 6,
dans lequel les éléments de préhension (120) sont montés sur le dispositif de préhension (100) à l'aide de moyens de fixation (150) détachables sans outil.

8. Système selon l'une des revendications 1 à 7,
dans lequel au moins un élément d'aspiration (160) est disposé sur la plaque de butée (140), lequel soulève au moins partiellement le produit alimentaire (P) à prendre pendant un processus d'aspiration, et
dans lequel l'élément d'aspiration (160) est de préférence encastré dans la plaque de butée (140) de telle sorte que celui-ci forme au moins approximativement une surface droite avec la plaque de butée (140) pendant le processus d'aspiration.

9. Système selon l'une des revendications 1 à 8,
dans lequel chacun des éléments de préhension (120) est guidé au moyen d'au moins deux barres de guidage (118) et/ou
dans lequel les éléments de préhension (120) du dispositif de préhension (100) sont en mesure de presser le produit alimentaire (P) dans une forme prédéfinie.

10. Système selon l'une des revendications 1 à 9,
dans lequel un moyen de détection (170) est monté sur la plaque de butée (140) et est en mesure de détecter le produit alimentaire (P).

11. Système selon l'une des revendications 1 à 10,
dans lequel le dispositif de transport (200) présente un convoyeur sans fin (200) qui contient au moins deux rouleaux de renvoi (220) et un convoyeur à bande sans fin (240),
dans lequel le produit alimentaire (P) à prendre par le dispositif de préhension (100) est transporté dans une direction de déplacement (X) sur une section de transport de produit de la bande transporteuse (200).

12. Procédé de commande d'un système de prise, de transport et de dépose d'un produit alimentaire en forme de boyau (P) à une machine à diviser en portions des aliments (300), qui présente au moins un tube de magasin (310), contenant les étapes consistant à :
détecter le produit alimentaire (P) à prendre sur un support de produit alimentaire (PA) d'un dispositif de transport (200) ;
positionner des éléments de préhension (120) d'un dispositif de préhension (100) dans une première position dans laquelle les éléments de préhension (120) sont positionnés sur des côtés opposés du produit alimentaire (P) à prendre ;
saisir le produit alimentaire (P) à prendre en déplaçant de manière réversible au moins l'un des éléments de préhension (120) dans la direction du produit alimentaire (P) jusqu'à ce qu'une deuxième position soit atteinte ;
comprimer le produit alimentaire (P),
dans lequel le produit alimentaire (P) est pressé dans une forme prédéfinie au moyen des éléments de préhension (120) et d'une plaque de butée (140) et, le cas échéant, du support de produit alimentaire (PA) ;
déplacer le dispositif de préhension (100) avec le produit alimentaire (P) dans une position prédéfinie ; et
déposer le produit alimentaire (P) dans le tube de magasin (310) de la machine à diviser en portions des aliments (300).

13. Procédé de commande d'un système selon la revendication 12,
dans lequel le produit alimentaire (P) est pressé sur le support de produit alimentaire (PA) de la bande transporteuse (200) au moyen des éléments de préhension (120), de la plaque de butée (140) et du support de produit alimentaire (PA) dans une forme prédéfinie ou
dans lequel le produit alimentaire (P) est pressé dans une forme prédéfinie au cours du procédé au moyen des éléments de préhension (120) et de la plaque de butée (140).

14. Procédé de commande d'un système selon la revendication 12 ou 13,
dans lequel un deuxième moyen de détection (320) est prévu qui détecte le produit alimentaire (P) dans le dispositif de préhension (100) alors que celui-ci se trouve dans la position prédéfinie au-dessus du tube de magasin (310).

15. Procédé de commande d'un système selon l'une des revendications 12 à 14,
dans lequel un troisième moyen de détection (330) est prévu qui détecte un temps d'éjection,
dans lequel le temps d'éjection correspond à un laps de temps qui commence essentiellement lors de la dépose du produit alimentaire (P) par le dispositif de préhension (100) dans le tube de magasin (310) et se termine dès que le produit alimentaire (P) se trouve essentiellement complètement à l'intérieur du tube de magasin (310).
